# EUROPEAN PATENT SPECIFICATION

(11) **EP 3 331 763 B1**
(45) Date of publication and mention of the grant of the patent: **07.10.2020**
(21) Application number: 16826443.0
(22) Date of filing: 04.08.2016
(51) Int. Cl.: B65B 25/06, B65B 25/14, B65B 35/30, B65B 35/44, B65B 39/00, B65B 39/02, B65B 39/06, B65B 43/12, B65B 43/14, B65B 43/26, B65B 43/28, B65B 43/30, B65B 51/10, B65B 51/14, B65B 61/00, B65B 5/06

(54) **APPARATUS FOR PACKAGING OF A PRODUCT IN A RESPECTIVE PREFORMED WRAPPING**
VORRICTHUNG ZUM VERPACKEN EINES PRODUKTS IN EINER VORGEFERTIGEN VERPACKUNG
APPAREIL PERMETTANT D'EMBALLER UN PRODUIT DANS UN EMBALLAGE PRÉFORMÉ

(30) Priority: 06.08.2015 IT UB201561098 U
(43) Date of publication of application: 13.06.2018
(73) Proprietor: Pulsar S.r.l., 40013 Castel Maggiore (Bologna) (IT)
(72) Inventor: FRANZAROLI, Massimo, 40013 Castel Maggiore (Bologna) (IT)
(74) Representative: Fanzini, Valeriano
(86) International application number: PCT/IB2016/054718
(87) International publication number: WO 2017/021928

(56) References cited:
- EP-A1- 0 618 134
- DE-U1-202006 009 825
- GB-A- 2 065 060
- US-A- 3 877 562
- US-A- 4 062 169
- US-A- 4 301 842
- US-A- 4 345 629
- US-A- 4 541 227
- US-A- 5 024 042
- US-A1- 2005 022 467
- US-A1- 2006 059 868
- US-A1- 2009 188 209
- US-A1- 2013 291 485

## Description

### Technical field

This invention relates to an apparatus for packaging a product in a respective preformed wrapper or preformed bag.

Preferably, the packaged product is a product of the tissue industry, that is, a product made of paper for personal or domestic use and, preferably, defined by a group of respective articles which are, in particular, arranged in one or more layers placed on top of each other, and especially are in the form of packets, in particular packets of paper face wipes, hand towels or handkerchiefs, or are in the form of rolls, in particular rolls of toilet paper or kitchen paper, or are in the form of other articles.

### Background art

Known in the prior art are apparatuses for packaging a product in a respective preformed wrapper or bag which has a respective open end, allowing the product to be inserted into the wrapper. Examples of such apparatus are known from the following patent documents: US4541227A, US4062169A, US2006/059869A1, US2005/022467A1, US2013/291485A1, US3877562A, US5024042A, EP0618134, GB2065060A, US4345629A, US4301842, DE202006009825U1, US2009/188209A1. These apparatuses comprise means for feeding the preformed wrappers, means for feeding the product and means for inserting the product into the preformed wrapper through the open end.

These prior art apparatuses for packaging articles in respective preformed wrappers do not, however, allow fine quality packages to be made. Indeed, in these prior art machines, the bag is held at the bottom by corresponding retaining pins and corresponding internal jaws which act by friction to open the open end of the wrapper. Thus, when the product is inserted into the bag, air may be trapped in the wrapper, causing the respective retaining means to tear the bag before the product has been fully inserted into it. As a result, the packages do not have a particularly neat, attractive finish.

The industry thus feels the need for apparatuses which allow obtaining filled bags which create a particularly neat and tidy effect and which, in particular, do not make excessive folds or creases on the surface of the bag, especially on or near the bottom of the bag.

Another problem with these prior art apparatuses is that the bag retaining rings by which the bags are held while they are being handled by the feeding means tend to stick to the bag feeding means and may require prompt action by personnel, which in turn may involve shutting down the apparatus.

Another need felt in the industry is that for apparatuses whose operation is effective and whose construction costs are relatively low.

Another need felt in the industry is that for apparatuses which minimize the need for personnel for operating and maintenance purposes and, in particular, which appreciably reduce machine downtime.

### Disclosure of the invention

This invention therefore proposes a new solution as an alternative to the solutions known up to now and, more specifically, proposes to overcome one or more of the above mentioned drawbacks or problems and/or to meet one or more of the needs felt by the trade and which, in particular, may be inferred from the above.

That way, it is possible to hold the preformed wrapper carefully while it is being filled, thus obtaining packages whose appearance is improved compared to those obtained by similar apparatuses known in the prior art.

### Brief description of the drawings

This and other innovative aspects or specific advantageous embodiments of the apparatus are set out in the appended claims and its technical features and advantages are apparent from the detailed description which follows of preferred, advantageous embodiments of it which must, however, be considered purely as non-limiting examples of the invention, the description being made with reference to the accompanying drawings, in which:
- Figure 1 is a perspective view of a first preferred embodiment of an apparatus according to this invention, showing in particular the means for filling the preformed wrapper;
- Figures 2 to 6 are corresponding perspective views similar to Figure 1, showing the different steps by which the product is inserted into the wrapper by the apparatus of this invention;
- Figures 7 to 10 are perspective, front, side and rear views, respectively, showing the preferred embodiment of clamping means according to this invention, in a condition preceding the step of clamping the wrapper;
- Figures 11 to 14 are perspective, front, side and rear views, respectively, showing the preferred embodiment of the clamping means, in a condition of actually clamping the wrapper;
- Figures 15 to 19 are respective perspective views showing the means and different steps for removing the retaining element which holds the bags on the feeding means of the first preferred embodiment of the apparatus according to the invention;
- Figures 20A to 20D are respective perspective side and top views of a second preferred embodiment of the apparatus according to the invention;
- Figures 21A to 21C are respective perspective and longitudinal cross section views showing the transversely movable conveying means for making the group of articles in the second embodiment of the apparatus according to the invention;
- Figures 21D to 21F are respective top plan, front and longitudinal cross section views of the plate for engaging the sheet or belt of the movable conveying means of Figures 21A to 21C whose purpose is to compensate for dimensional differences of the articles conveyed;
- Figure 22 schematically represents the steps by which a group or layer or articles is made by the transversely movable conveying means of the second preferred embodiment of the apparatus;
- Figure 23A is a side view showing the pusher means for pushing the group of products into the preformed wrapper or bag in the second preferred embodiment of the apparatus;
- Figures 23B and 23C are respective perspective views showing the engagement member or plate of the pusher of Figure 23A for engaging the group of articles, illustrating in particular the elastic means for engaging and keeping in the spread-apart condition the walls of the preformed wrapper or bag in the second preferred embodiment of the apparatus;
- Figure 23D is a perspective views showing the engagement member or plate of the pusher for engaging the group of articles, in a slightly retracted position upstream of the joining and cutting means for applying the action by which the walls of the preformed wrapper or bag are engaged and held in the spread-apart condition;
- Figure 24A is a perspective view of the end closing means, in particular for sealing and cutting the respective end of the preformed wrapper or bag in the second preferred embodiment of the apparatus according to this invention;
- Figure 24B is a perspective view showing in particular the joining and cutting means for trimming the end of the bag and used in the closing means of Figure 24A;
- Figures 25A to 25E are respective perspective, front top and side views of the part of the means for spreading apart the walls or panels of the preformed wrapper or bag in the second preferred embodiment of the apparatus according to this invention;
- Figure 25 F is a perspective view of the means for engaging and wiping the filled bag;
- Figure 26A is a perspective view of the suction means for extracting the bag trimming and used in the second preferred embodiment of the apparatus according to this invention;
- Figure 26B is a perspective view of the suction means for extracting the trimmed off portion of the bag, shown in the raised condition where the trimmed off is extracted;
- Figure 27 is a perspective view of a further embodiment of the spreading-apart means for keeping in the spread open condition at least one respective part or panel of the preformed wrapper or bag;
- Figure 28 is a perspective view showing the further vacuum means for creating a vacuum at the suction cup means by which the preformed wrapper or bag is opened.

### Detailed description of preferred embodiments of the invention

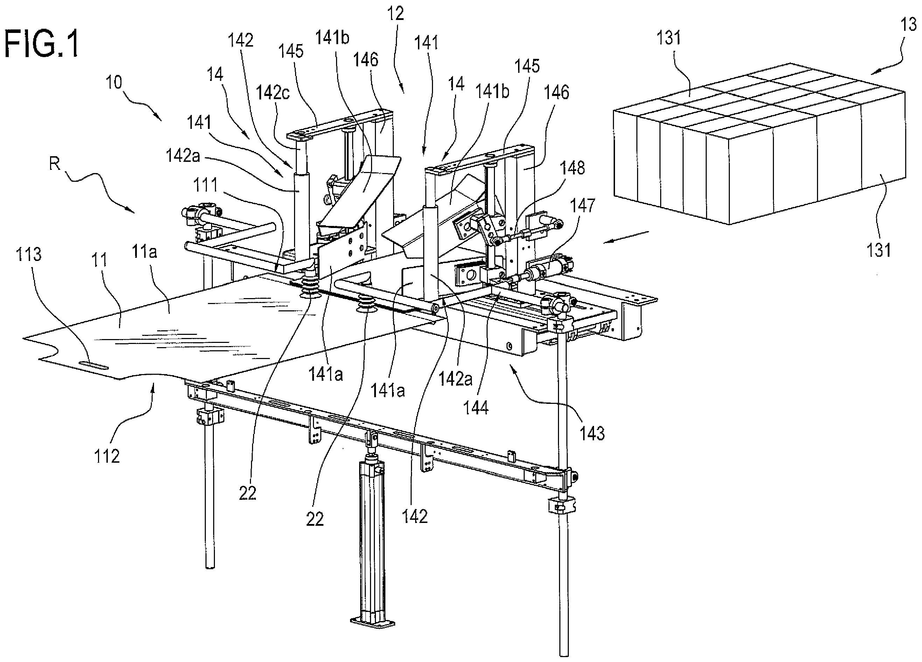

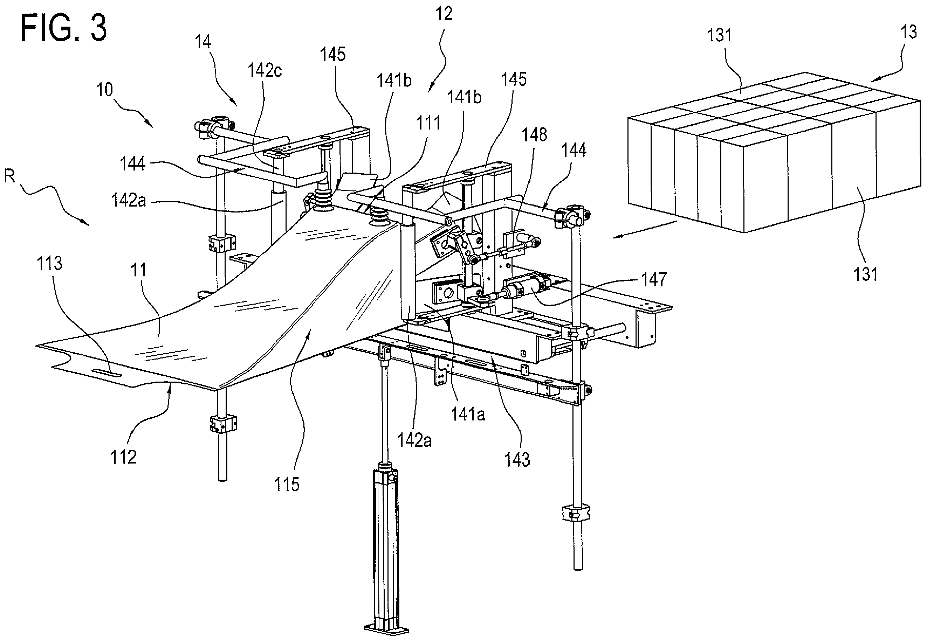

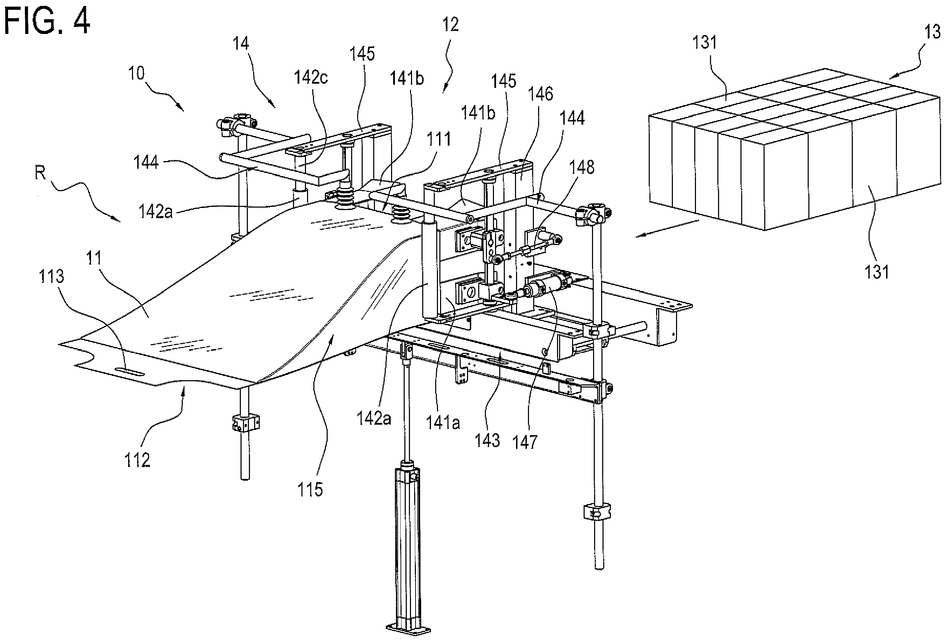

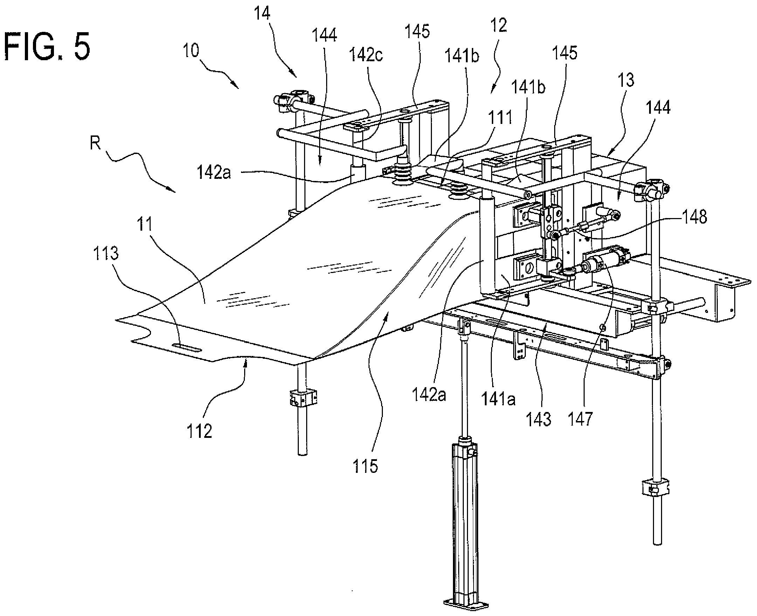

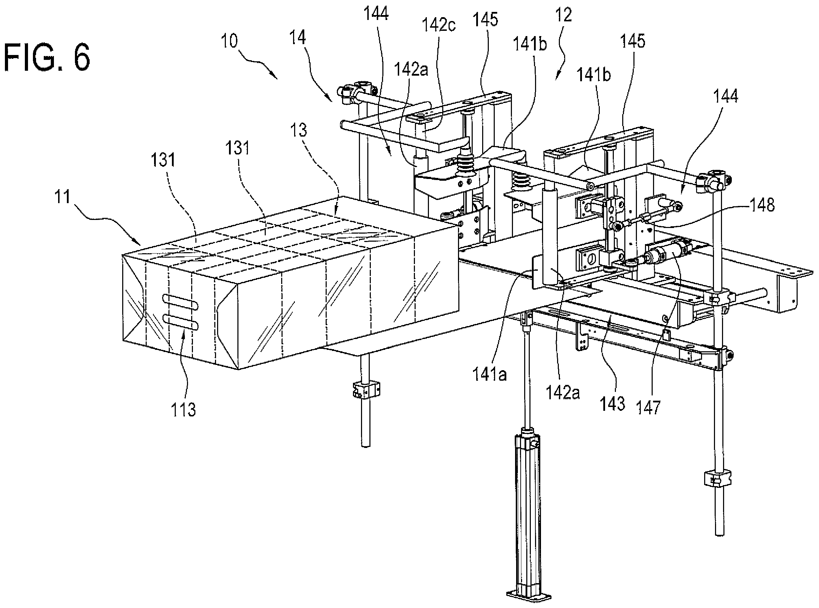

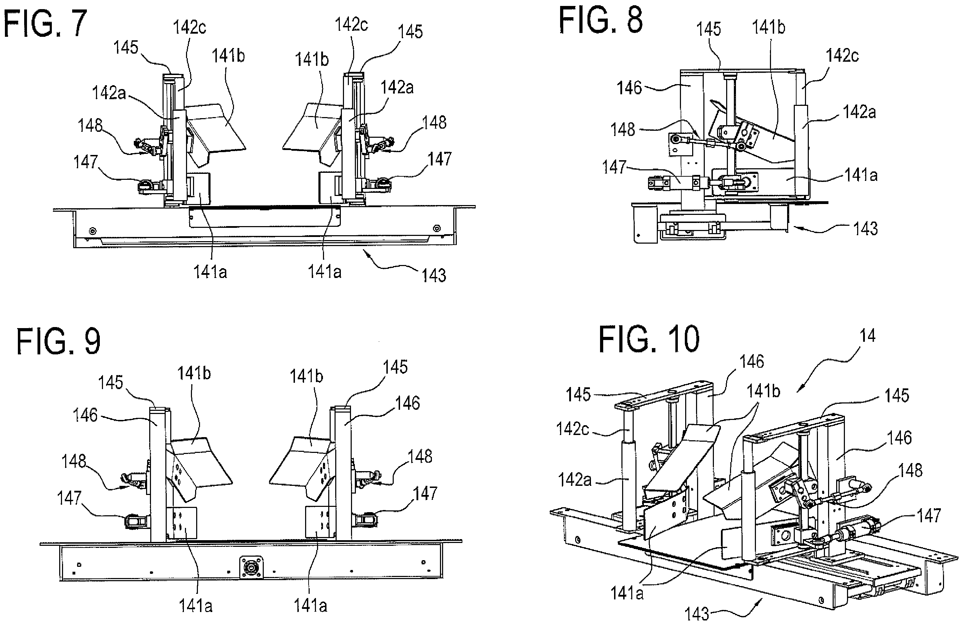

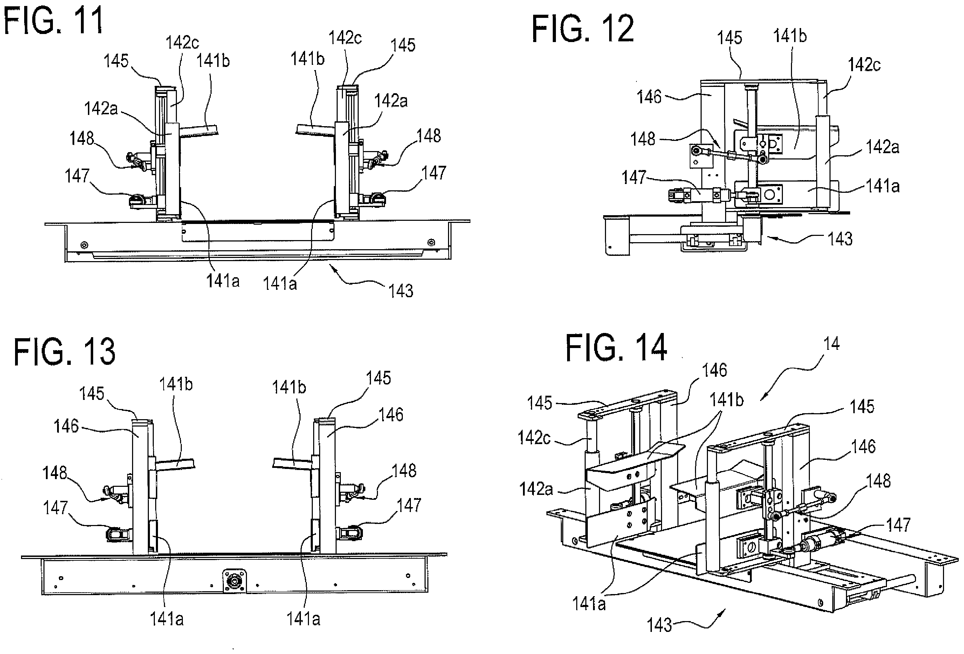

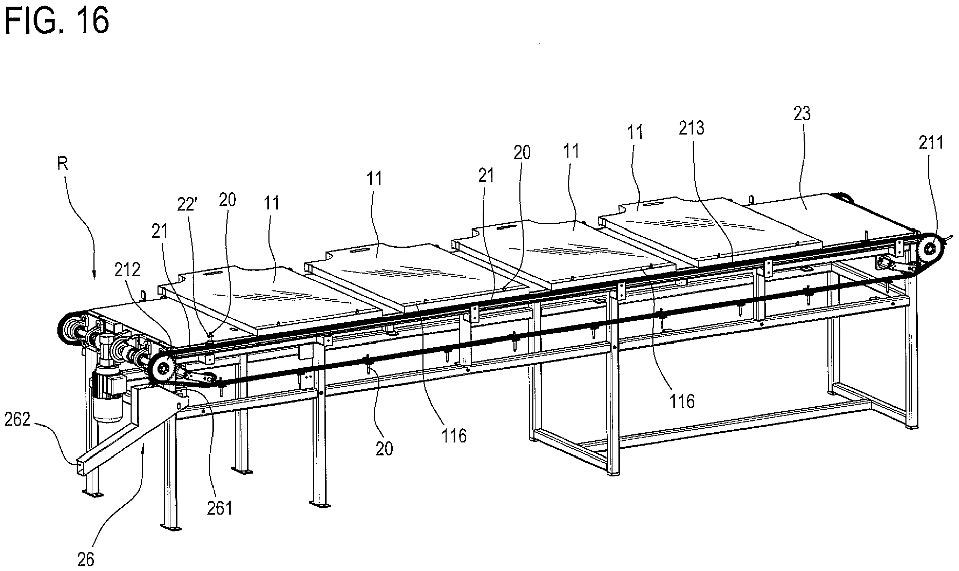

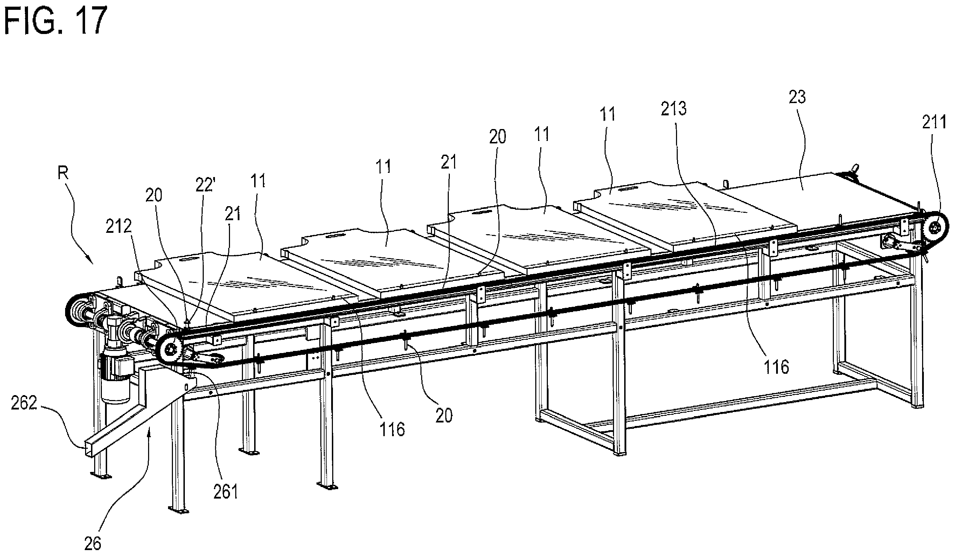

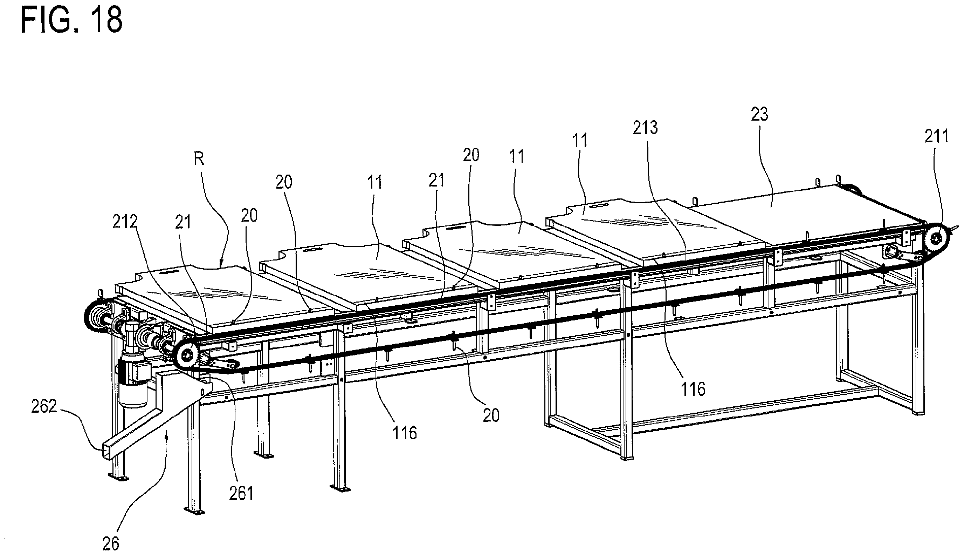

Figures 1 to 19 illustrate a first preferred embodiment 10 of an apparatus for packaging a product in a respective preformed wrapper 11, preferably made of a film, especially a plastic film, and in particular in the form of a respective preformed or ready-formed bag for receiving and housing the product.

As may be inferred from the drawings, the ready-formed wrapper 11 has a respective open side 111, which allows the product to be inserted into the wrapper itself by the apparatus of the invention, and comprises on the opposite, closed side of it 112, corresponding means for holding the wrapper, in particular in the form of at least one handle 113 which makes it easier for the full package to be transported.

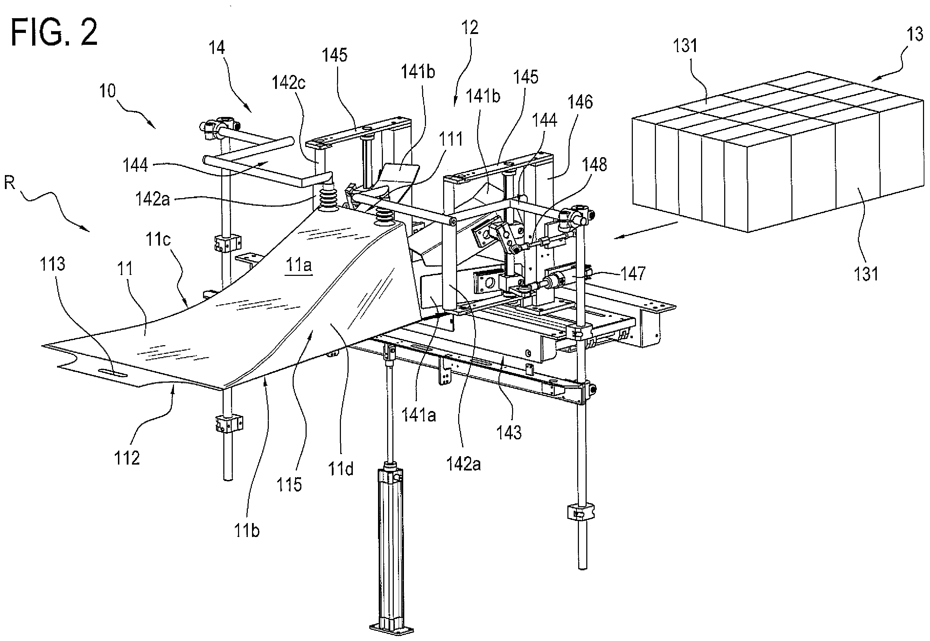

As may be inferred from Figure 2, the preformed wrapper or bag comprises respective panels 11a, 11b, 11c, 11d which are adapted to define corresponding side or peripheral walls of the wrapper itself and which extend into respective portions for making the bottom wall of the wrapper or bag after it has been filled with product.

The packaged product 13 is in turn made up preferably, but not exclusively, of a product made of a paper material, that is, in the form of a product for personal or domestic use or for cleaning in general. In practice, it is in the form of a product of the tissue paper industry.

Preferably, the packaged product is defined by a group of articles comprising one or more layers of articles placed on top of one another and which preferably consist of packets 131 of disposable paper face wipes, hand towels or handkerchiefs but which might also be in the form of rolls, in particular rolls or toilet paper or similar articles.

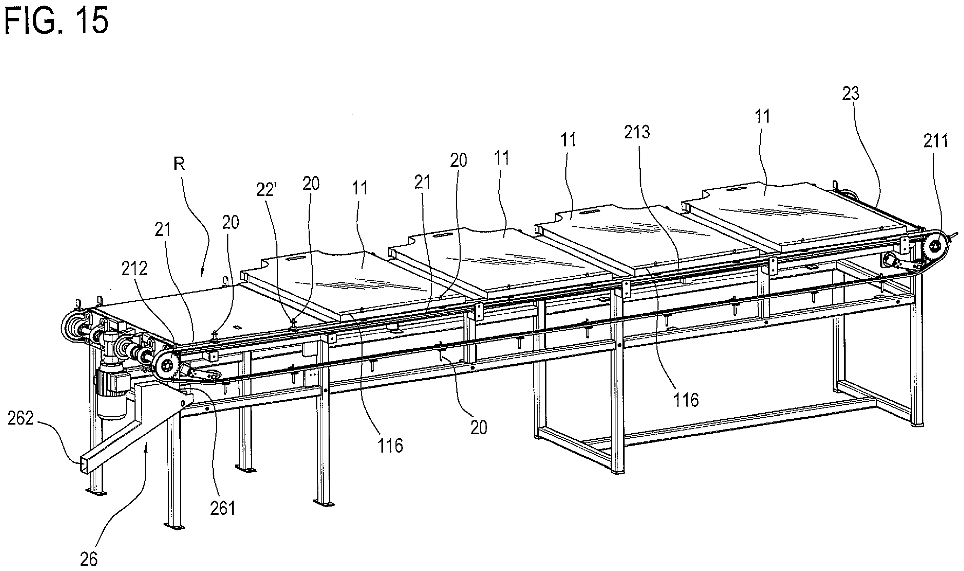

The preferred embodiment 10 of the apparatus comprises feeding means, not illustrated in detail in the corresponding drawings, for feeding the product, in particular along a respective longitudinal direction of movement, and feeding means for feeding the ready-formed wrappers 11, in particular along a direction transverse to the longitudinal direction of movement of the product until reaching the zone R where the product is inserted into the wrapper. The two feeding means are illustrated separately in Figures 15 to 18.

Advantageously, the apparatus also comprises means 12 for inserting the product through the open end 111 and which comprise the aforementioned means for feeding and longitudinally pushing the product, a respective embodiment of which is illustrated with reference to a second preferred embodiment of the apparatus, described further on.

Upstream of the aforementioned product feeding and pushing means, there are means, not illustrated in figures 1 to 19, for aggregating the products or for forming the group of products according to the predetermined, desired configuration, which is variable according to requirements, and a respective preferred embodiment of which is illustrated with reference to the second preferred embodiment of the apparatus, described further on.

Also not illustrated in detail in the drawings and a respective preferred embodiment of which is nevertheless illustrated with reference to the second preferred embodiment of the apparatus, there are provided, downstream of the inserting means, end closing means for closing the open end of the wrapper which, after the product has been inserted into the wrapper and the wrapper with the product inside it has been advanced, downstream of the end closing means, fold the trailing end of the wrapper around the rear face of the product, transversely seal the rearwardly directed part of the wrapper, and lastly, trim an excess strip from the wrapper itself.

Once this operation has been carried out, the packaged product is fed out of the apparatus and the trimmed margin of the package is conveniently extracted from the apparatus, in particular by suction.

Advantageously, the apparatus comprises means 14 for clamping the preformed wrapper or bag when the product is inserted into the wrapper or bag.

That way, it is possible to fill the respective preformed wrapper or bag reliably and completely even if the product 13 is substantially the same in area size as the opening through which the product is inserted into the wrapper or bag, in order to obtain a wrapper or bag which is neat and tidy, without loose or baggy side walls.

In particular, in this advantageous embodiment, the means 14 for clamping the preformed wrapper operate on the wrapper or bag in the open condition.

Advantageously, the means 14 for clamping the preformed wrapper engage the wrapper 11 at the respective open end of it 111.

In particular, the respective wrapper can be effectively clamped only when necessary, that is to say, when the product is being inserted into it and the wrapper must be held firmly and steadily in place.

Advantageously, the wrapper clamping means 14 are adapted to engage opposite, inside and outside faces of a corresponding margin of the wrapper.

In particular, advantageously, as may be inferred from the drawings, the means 14 are adapted to engage opposite, preferably transversely opposite, faces of opposite margins of the same wrapper.

In particular, advantageously, the clamping means 14 are adapted to engage the respective short side 115, in particular both short sides, of the wrapper or bag.

That way, it is not necessary to provide particularly large clamping means. Advantageously, the means 14 for clamping the wrapper 11 comprise wrapper internal means 141.

The means 14 for clamping the wrapper 11 also advantageously comprise wrapper external means 142.

In particular, the internal and external means act in conjunction to clamp a corresponding wrapper portion or margin.

That way, the wrapper can be clamped easily and effectively, without excessive structural and functional complications.

In particular, advantageously, as may be inferred, the clamping means are adapted to engage opposite, in particular transversely opposite, sides of the same wrapper.

That way, the preformed wrapper or bag 11 can be held in place particularly effectively so as to allow the product to be easily inserted to produce a wrapper or bag with a neat and attractive finish. Advantageously, as illustrated, the wrapper clamping means 14 comprise means 141 for spreading open the mouth 111 through which the product can be inserted into the wrapper itself.

Thus, it is possible to provide wrapper clamping means which advantageously perform the further function of spreading open the mouth through which the product is inserted. This contributes to creating an apparatus with an advantageously unencumbered structure.

In particular, first and second means 141, 141 are provided for spreading open the mouth 111 through which the product can be inserted, preferably operating on opposite, especially transversely opposite, sides of the wrapper.

Advantageously, the external means 142 of the preformed wrapper operate in conjunction with the spreading open means 141 which internally engage the respective wrapper and clamp it against the external means 142.

The clamping action can thus be obtained by means of basic and relatively uncomplicated mechanisms, with the advantage of limiting the production costs of the apparatus
Advantageously, first and second external wrapper engagement means 142, 142 are provided, in particular operating on opposite, especially transversely opposite, sides of the wrapper.

Advantageously, the external wrapper engagement means 142 are located at the means 141 for spreading open the mouth through which the product is inserted into the wrapper, in particular when these means are in the spread open condition.

In practice, advantageously, the wrapper external means 142 operate in conjunction with the spreading open means 141 which internally engage the respective wrapper margin and clamp it against the external means 142.

The clamping action can thus be obtained by means of a basic, yet effective, mechanism.

Advantageously, the wrapper external means 142 are in the form of means which are fixed relative to the internal engagement and/or spreading open means 141 which are movable in order to apply an action by which the corresponding wrapper margin is clamped against the external engagement means 142.

In particular, the internal engagement and/or wrapper spreading open means 141 push and clamp the corresponding wrapper margin against the respective means 142 for externally engaging the wrapper. Advantageously, the movement of the spreading open means which spread open the product insertion mouth of the wrapper defines or coincides with, or at least a final part of it defines or coincides with, the movement by which the respective wrapper margin is clamped.

That way, it is possible to obtain a simple and effective clamping action. As illustrated, the external wrapper engagement means 142 extend vertically or perpendicularly to the respective wrapper.

It is thus possible to obtain an advantageous configuration for the means for clamping the preformed wrapper or bag.

Advantageously, the external wrapper engagement means 142 have a respective portion 142a for engaging the corresponding wrapper margin and which is made of an elastic material, preferably rubber.

This allows an effective retaining action to be applied to the corresponding margin of the wrapper.

Advantageously, the external wrapper engagement means 142 are movable, in particular longitudinally movable, together with the internal engagement and/or spreading open means 141.

In particular, advantageously, the external wrapper engagement means 142 are mounted on the same carrier unit 143 which is movable, in particular longitudinally movable, and which also carries the internal engagement and/or spreading open means 141.

This provides a particularly simple, unencumbered structure for the movable parts of the apparatus.

Advantageously, these clamping means 14 are adapted to release the preformed wrapper when the wrapper is pulled away from them by the action applied to it in particular by the means for feeding and pushing the product.

This allows obtaining an effective action for releasing the wrapper. Advantageously, these clamping means 14 engage a portion of the preformed wrapper 11 which can be eliminated.

Thus, the outward appearance of the finished package is not adversely affected in any way and, at the same time, a package with a well made finish can be obtained.

In particular, the clamping means 14 engage an end portion, in proximity to the edge 111 defining the open preformed wrapper mouth through which the product is inserted.

In particular, the clamping means 14 engage a portion of the preformed wrapper which is situated downstream of the zone for closing the open end 111, in particular by sealing, that is to say, which is on an end margin of the wrapper which is separated, that is, trimmed off the wrapper, and then extracted from the working zone.

The clamping means, in particular the external means 142, comprise a first and a second clamping pad 142a, 142a which are spaced from each other, in particular transversely spaced, especially by an amount such as to allow the product being inserted into the wrapper to pass through it. The first and second clamping pads 142a, 142a are adapted to engage opposite side portions of the preformed wrapper or bag 11.

As illustrated, the internal engagement and/or spreading open means 141, comprise on each side a first and a second jaw 141a, 141b which move apart, in particular vertically or perpendicularly to the wrapper.

In particular, the internal engagement and/or spreading open means 141, comprise on each side a first and a second jaw 141a, 141b which move apart, in particular with a vertical or perpendicular component of motion, for example relative to the wrapper when the wrapper is in a flat condition. Advantageously, the internal engagement and/or spreading open means 141, comprise on each side a first and a second jaw 141a, 141b which are movable, preferably together, between an inner, disengaged position and an outer, wrapper engaged position, in particular where they define means for engaging and clamping the corresponding margin of the wrapper.

Each jaw 141a, 141b is in the form of an engagement arm, pivoted at a respective end and adapted to engage the wrapper with the respective free end.

In particular, each arm 141a, 141b has an L-shaped transverse cross section to define corresponding portions for simultaneously engaging the respective upper, or lower, side margin at the corner zone of the mouth of the preformed wrapper or bag.

Advantageously, the external wrapper engagement means 142 extend for the full perpendicular height which is defined by the first and second engagement jaws in the spread open condition, that is to say, in particular, for the full height of the respective lateral face of the preformed wrapper or bag. That way, the preformed wrapper or bag can be clamped effectively.

Further advantageously, although not illustrated in detail in the accompanying drawings, the external wrapper engagement means 142 have a flat face which, in the gripping condition, engages the wrapper, and which, in particular, is obtained using an external engagement pad with a quadrangular cross section.

That way, a particularly effective retaining action can be applied to the preformed wrapper or bag.

In particular, the external wrapper engagement means 142 move to and fro together with the spreading open means.

Advantageously, the external wrapper engagement means 142 and the corresponding internal or spreading open means 141, which engage the corresponding side margin of the wrapper are mounted on common supporting means 144, supported by the base 143 which is movable longitudinally to and fro.

The means 144 for supporting the internal and external means for engaging a respective side of the wrapper are adjustable or movable transversely to allow quick and easy changing of configurations when changing over to a different package size.

The external wrapper engagement means 142 are supported by a corresponding stem 142c, in particular extending perpendicularly from a corresponding upper longitudinal bar 145.

Advantageously, the common supporting means 144 for the corresponding external wrapper engagement means 142 and the internal or spreading open means 141 comprise an upright 146 which supports a respective longitudinal bar 145, the longitudinal bar 145 having, extending downwardly therefrom, the stem 142c, which supports the external wrapper engagement means 142, and the rotary stem 141c for articulatedly supporting the internal or spreading open means 141, or in particular, both the first and second jaws for spreading open the corresponding side of the wrapper.

As illustrated, the upright 145 supports respective means for actuating the internal or spreading open means 141 and comprising a respective actuator, in particular in the form of a respective pneumatic cylinder 147 for rotating the jaw mounting stem and a corresponding element 148 for upwardly rotating the upper jaw.

In particular, these clamping means move longitudinally forwards when the bag opens and then longitudinally backwards when the bag is pulled away and moved forwards towards the closing or sealing means by the product pusher.

Advantageously, although not illustrated in detail in the accompanying drawings, the external wrapper engagement means might comprise means for magnetically attracting the internal engagement means towards and against the external means themselves.

In another preferred embodiment, not illustrated in the accompanying drawings, the external wrapper engagement means might be movable towards and against the internal engagement means using corresponding actuating means, in particular defined by corresponding pneumatic actuating means, preferably in the form of a first and a second pneumatic cylinder, whose respective stem supports, at its free end, corresponding external engagement means.

As illustrated, opening means 22 are provided for opening the mouth through which the product is inserted, these opening means being in the form of suction cup means which preferably move between a lower position, for gripping the corresponding wrapper margin, and a raised position for inserting the means by which the mouth is spread open.

As may be well inferred from Figures 15 to 18, means 20 are provided for retaining the preformed wrapper. That way, a retaining action can be applied in combination with the clamping means.

In particular, the retaining means are in the form of corresponding pin means 20 which are inserted into corresponding hole means provided on one end 116 of the preformed wrapper, in particular on a protruding margin of the wrapper, especially on the open end where the product is inserted into the preformed wrapper.

The retaining means 20 are provided between the clamping means, in particular at the lower position thereof, and are defined by the feeding means by which the wrapper is advanced towards the product insertion zone.

Figures 15 to 19 illustrate a preferred embodiment of the means for feeding the preformed wrapper 11 to the filling zone, labelled R, where the product is inserted into the wrapper.

As stated, the means for feeding the preformed wrapper comprise means 20 for latching to corresponding hole means provided on the wrapper, in particular on the end of the wrapper and preferably on a margin 116 protruding from the edge of the wrapper, which defines the open mouth where the product is inserted.

Advantageously, as illustrated, the latching means are in the form of corresponding pin means 20 which protrude perpendicularly from corresponding movement means 21, in particular in the form of a corresponding elongate rotating or articulated endless rotating element, especially in the form of a respective chain which is moved on corresponding end toothed wheels 211, 212 having a respective positive upper section 213 which runs parallel to a table for supporting and feeding the wrappers 11.

The table for supporting the wrappers while they are being fed is labelled 23 in the accompanying drawings.

Each latching pin 20 is provided with a corresponding annular retaining element 22' for keeping the preformed wrapper latched onto the pin 20.

The apparatus comprises advantageous and effective means 26 for removing the respective retaining element 22' of the preformed wrapper movement means, in particular from the respective pin means 20.

Advantageously, the means 26 for removing the respective retaining element 22' of the movement means comprise means 261 for engaging/disengaging the retaining element from the corresponding pin means 20.

Advantageously, the means 261 for engaging and disengaging the retaining element 22' from the corresponding pin means 20 are adapted to engage the retaining element 22' by the face of it on the side opposite that from which the corresponding pin means 20 protrude.

Advantageously, the means 261 for engaging and disengaging the retaining element 22' from the corresponding pin means 20 are in the form of fixed means engaged by the corresponding retaining element 22' as the latter is moved along by the corresponding movement means 21.

Advantageously, the means 261 for engaging and disengaging the retaining element 22' from the corresponding pin means 20 extend along a respective path which moves the retaining element 22' away from the movement means, preferably by causing it to be pulled off in particular from the corresponding pin means 20.

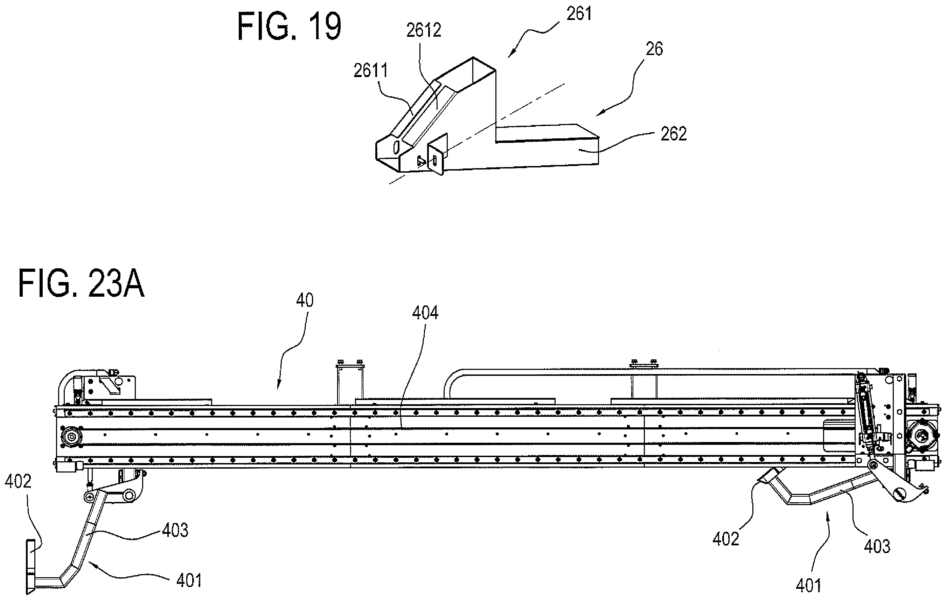

Advantageously, the means 261 for engaging and disengaging the retaining element 22' comprise at least one respective surface for slidably engaging the retaining element 22', in particular in the form of a first and a second slidable engagement surface 2611, 2612, well illustrated in Figure 19, the first and second surfaces being spaced from each other to allow the corresponding pin means 20 to pass between them.

As illustrated, advantageous guide means 262 are provided for channelling the respective retaining element 22' towards the corresponding collection area, in particular situated laterally or externally of the apparatus, preferably to allow it to be easily collected by personnel in charge.

Advantageously, the guide means 262 are, in particular, in the form of a respective tubular duct which is downwardly inclined and made as a single piece with the means 261 for engaging and disengaging the retaining element 22'.

In particular, as illustrated, the guide means 262 and/or the engagement means 261 are inclined downwardly, in particular in respective opposite angular directions.

In practice, the engagement/disengagement means 261 are inclined in an angular direction opposite to that of the guide means 262.

Advantageously, as illustrated, the means 26 for removing the respective retaining element 22' of the preformed wrapper movement means, in particular for removing the respective pin means 20 are located on the lower, return section of the movement means 21.

This provides a system which is at once effective, reliable and convenient for personnel, for removing the wrapper or bag retaining means from the apparatus.

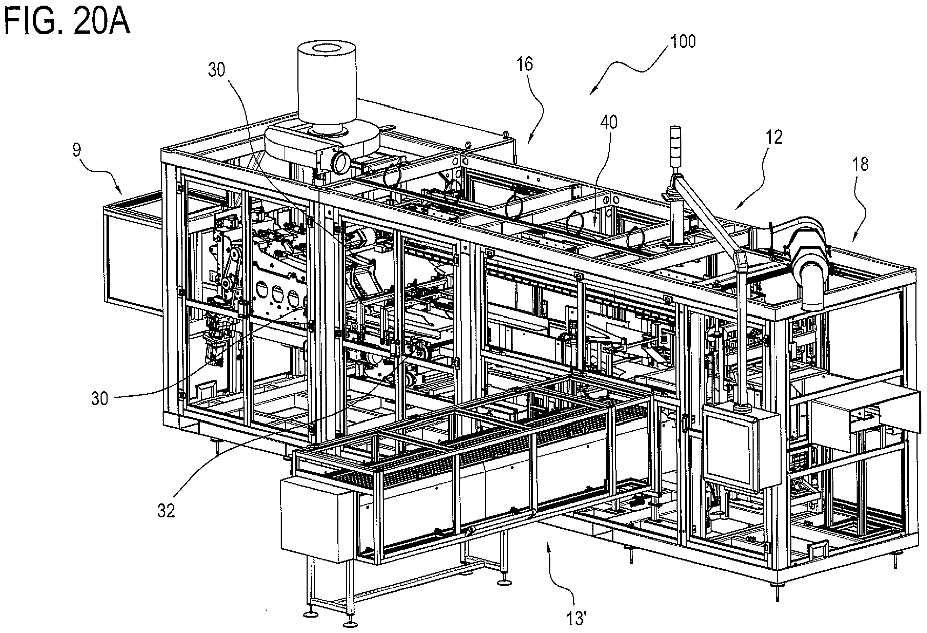

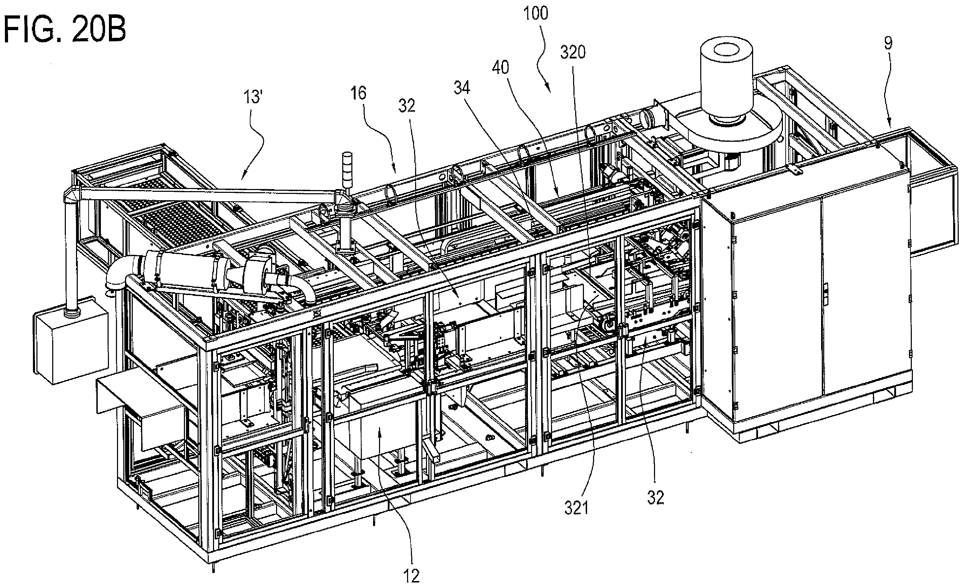

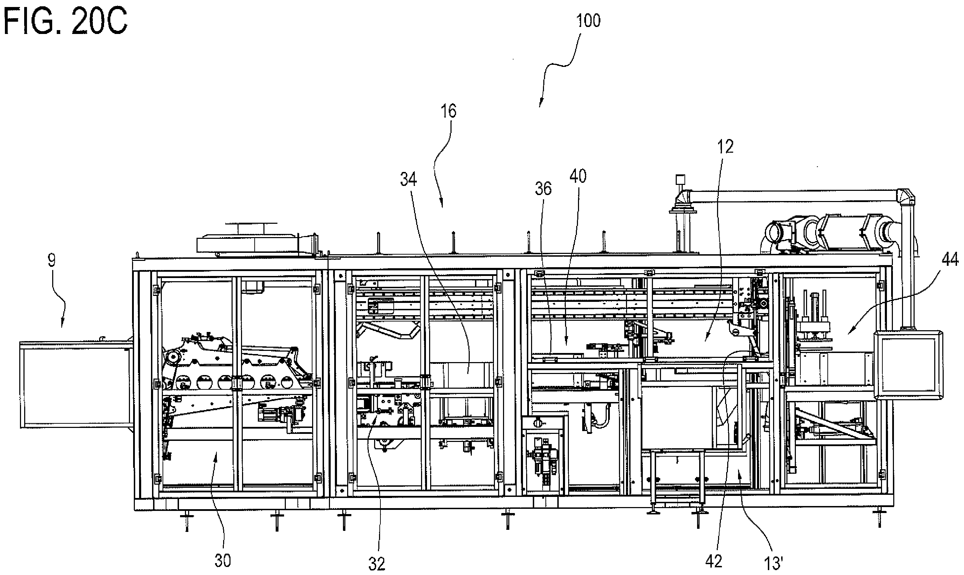

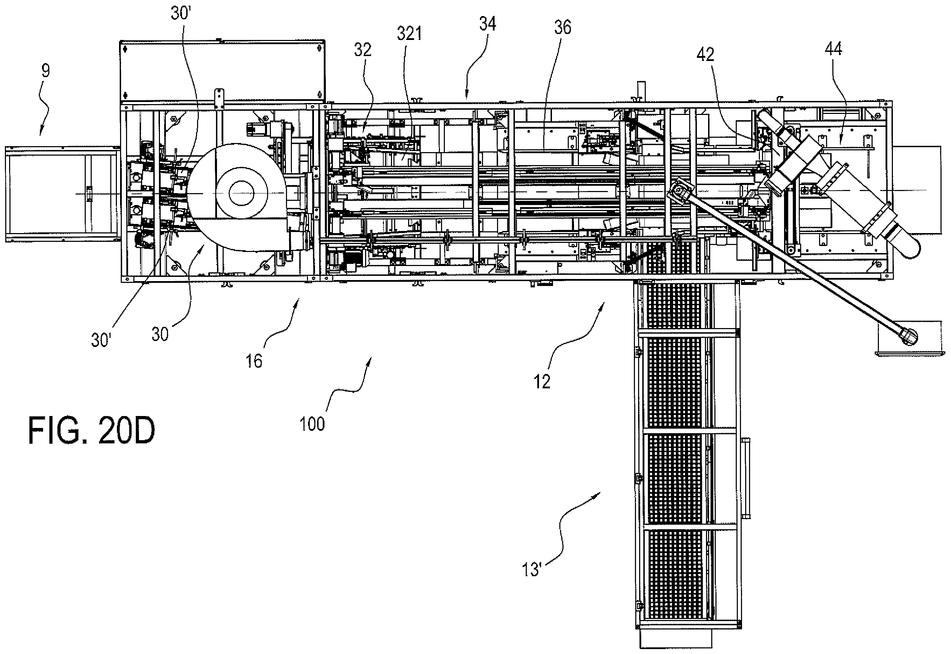

Figures 20A to 26B illustrate a second preferred embodiment 100 of an apparatus for packaging a product in a respective ready-formed wrapper 11, preferably made of a plastic film, and in particular in the form of a respective ready-formed bag for receiving the product, the apparatus comprising means 12 for feeding and filling the ready-formed wrapper or bag 11 and means 13' for feeding the preformed or ready-formed wrapper which are like those of the first preferred embodiment and which are not described again in detail so as to avoid making this description too lengthy.

Although not specifically illustrated in the accompanying drawings, the second preferred embodiment 100 of the apparatus is adapted to receive, from the corresponding feeding means, product or articles in the form of rolls, preferably in the form of rolls of toilet paper or rolls of kitchen paper, the feeding means upstream being preferably in the form of a first and a second conveying channel which are parallel to each other and which are inserted into the apparatus 100 at the upstream end 9 of the apparatus, where there are suitable means for receiving the respective end of the conveying means which feed the product or articles and which are not, however, illustrated in detail in the accompanying drawings.

Advantageously, the apparatus 100 comprises means 16 for defining the group of articles to be packaged in the preformed wrapper or bag.

Advantageously, the means 16 for defining the group of articles to be packaged in the preformed wrapper or bag comprise means 30, 30 for forming one or more parallel rows of articles, where the respective row comprises one or more of the articles.

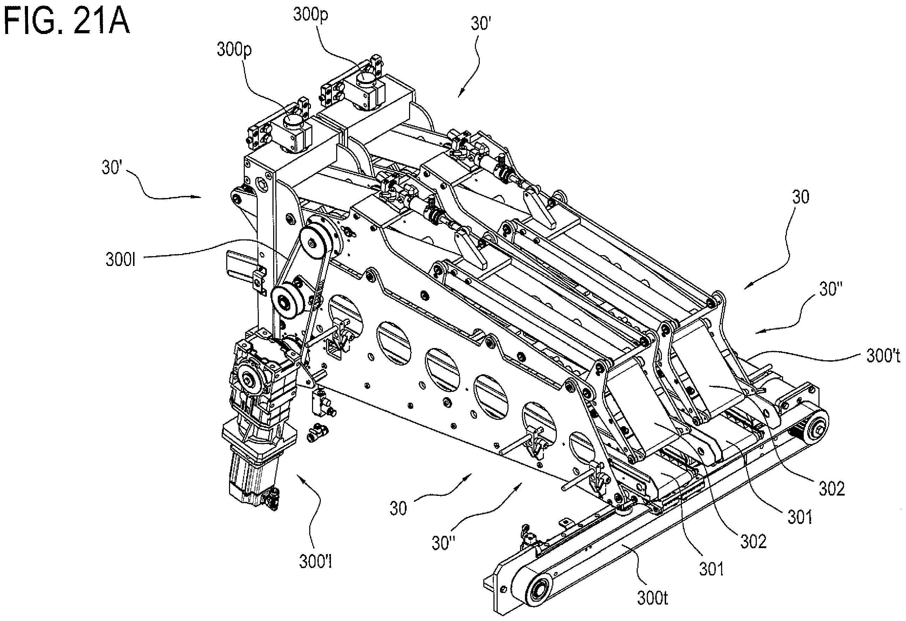

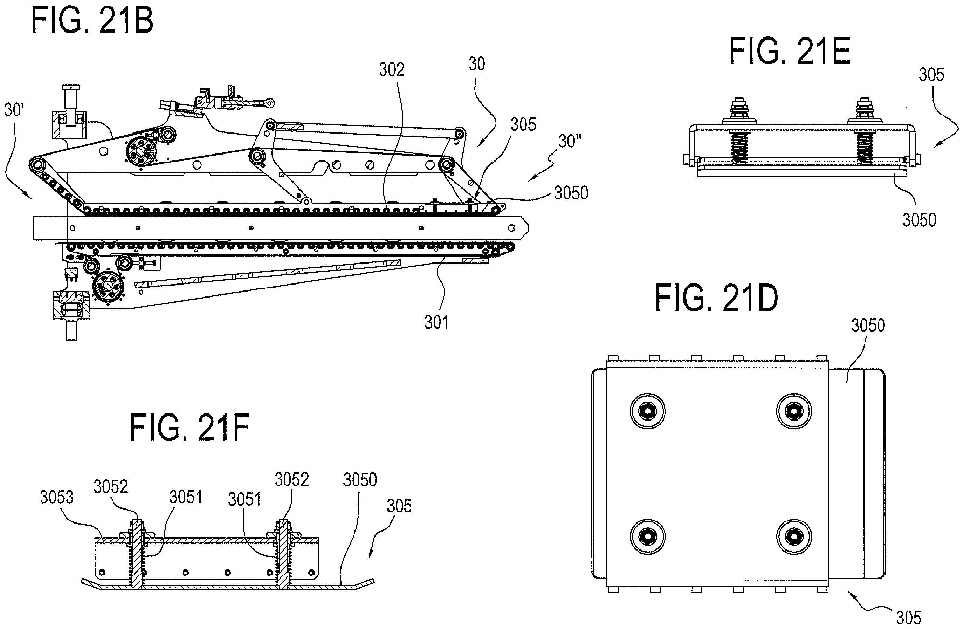

Advantageously, as illustrated in particular in Figures 21A to 21C, the means 30, 30 for forming one or more longitudinal rows of articles, where the respective row comprises one or more of the articles, comprise means for longitudinally feeding one or more articles to define the corresponding longitudinal row of articles, these feeding means being transversely movable to define corresponding parallel rows of articles.

In particular, as well illustrated in Figure 21A, the transversely movable means for feeding the articles comprise a conveyor, in particular a first and a second conveyor 30, 30, each having a fixed upstream end 30' for receiving the articles from corresponding feeding means, and a downstream end 30" for releasing the articles, the downstream end 30" being transversely movable at respective transverse positions corresponding to respective rows of articles of the respective group.

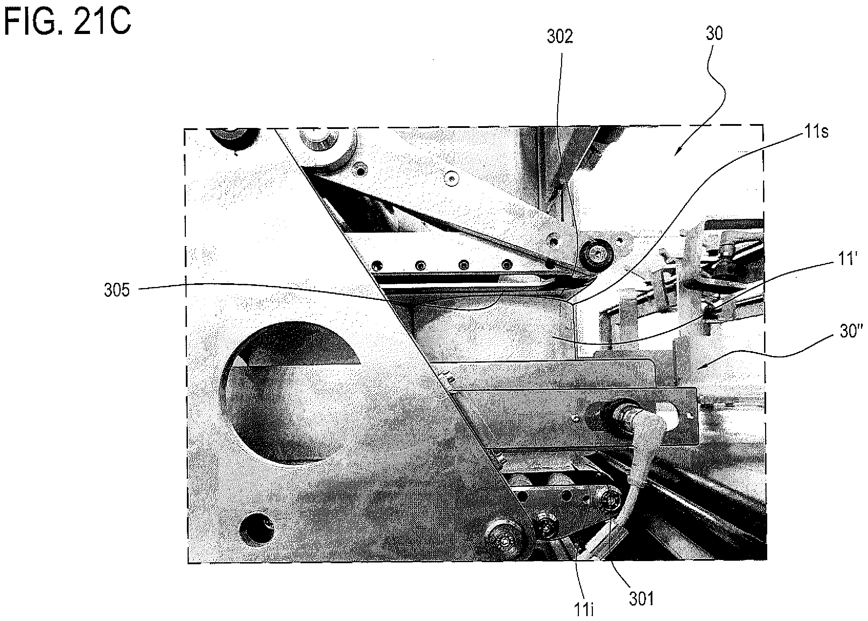

Advantageously, as illustrated in particular in Figure 21C, each movable conveyor 30, 30 comprises a first and a second, longitudinally extending rotary belt for engaging and feeding opposite sides of each article 11', in particular a lower conveyor belt 301 and an upper conveyor belt 302 for engaging the lower face 11i and, opposite it, the upper face 11s of each article 11'.

More specifically, as may be inferred from Figure 21A, each conveyor 30 is pivoted on a corresponding vertical pin 300p, at the respective upstream end 30', and is freely rotatable relative to the pin 300p, driven by corresponding transverse drive means or belt 300t, in particular defining a common drive belt for simultaneously driving the first and second conveyors 30, 30 forwards and backwards, or towards the right or left, this belt being provided at the free end of each conveyor 30 which it is suitably connected to. As illustrated, the rotary means or belt is driven by a corresponding motor 300't. Both of the article feed belts 301, 302 of each conveyor 30, in particular of both the first and the second conveyor 30, 30, are driven by a respective common motor 300'I by means of a corresponding transmission belt labelled 3001 in the drawing.

Advantageously, the rotary belt 301, 302 of the respective conveyor 30, 30 can be driven forward to advance the articles and, in particular also backwards to move the articles a little way back so as to move the article at the front of the articles being advanced on the conveyor 30, 30 itself to the initial position, that is, in phase, for the subsequent step of releasing the articles in the respective position of defining the corresponding group of articles.

Advantageously, as may also be inferred from Figures 21D to 21F, means 305 are provided for adjusting the spacing between the opposing engagement and feeding belts 301, 302 as a function of the corresponding dimension, in particular the height, of the article to be advanced.

Advantageously, the means 305 for adjusting the spacing between the opposing engagement and feeding belts 301, 302 are provided at the downstream end of the respective conveyor or belt 302 for engaging and feeding the articles.

In particular, preferably, as illustrated, the spacing adjustment means 305 allowing for the height of the respective article are provided on the upper engagement and feeding belt 302.

Advantageously, the means for adjusting the spacing between the opposing engagement and feeding belts 301, 302 are in the form of corresponding means 305 for pushing the respective engagement and feeding belt 302 against the opposing face of the article, in particular against the top face of the article 11' itself.

Advantageously, the means 305 for pushing the respective belt against the opposing face of the article comprise a respective plate 3050 for engaging and pushing the respective engagement and feeding belt 302, this plate acting on the face of the engagement and feeding belt 302 which is opposite the face which engages the respective article 11'.

Advantageously, means 3051 are provided for pushing the respective plate 3050 which engages the respective engagement and feeding belt 302, the means 3051 for pushing the respective plate 3050 are in the form of respective elastic means, in particular in the form of cylindrical helical compression springs, and are preferably supported by, especially coaxially outside of, respective supporting stems 3052 for guiding the vertical movement of the respective engagement plate, the stems being supported by respective means 3053 for fastening to the supporting structure of the corresponding conveyor 30.

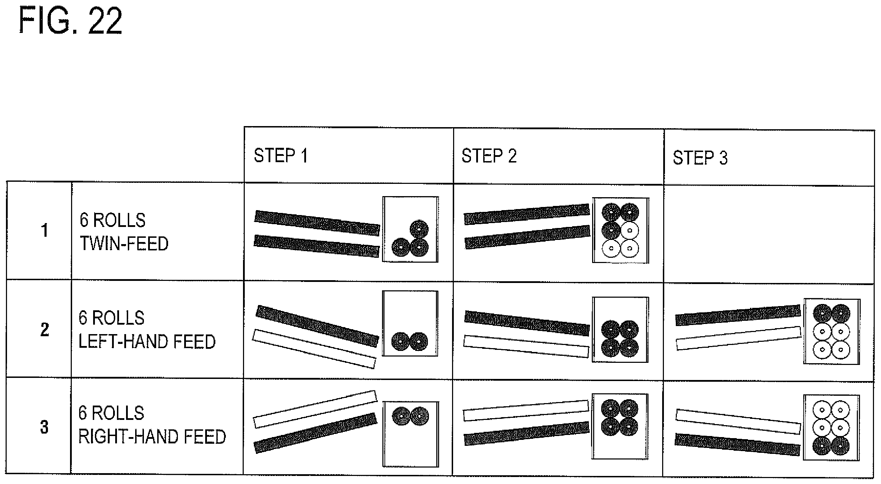

Advantageously, means are provided for controlling the first and second article feeding conveyors 30, 30 which are movable transversely for forming the one or more parallel rows of articles, where each row comprises one or more of the articles, as may be inferred from Figure 22.

Advantageously, the means for controlling the first and second conveyors 30, 30 perform a respective sequence of steps where both of the transversely movable conveyors for feeding the articles form the respective configuration of the group or layer of articles to be packaged, in particular when both of the feed channels upstream are feeding articles.

In particular, as illustrated, the means for controlling the first and second conveyors 30, 30 perform a respective sequence of steps where each conveyor 30, 30 fills, or provides, a respective end, or lateral, row of articles and both provide, preferably in sequence, a respective central row of articles, as may be inferred from steps 1 and 2 of the sequence illustrated in Figure 22, showing a group of six rolls in two rows being formed by a twin feed system.

Advantageously, the means for controlling the first and second conveyors 30, 30 perform a respective sequence of steps where only one of the transversely movable conveyors 30, 30 for feeding the articles forms the respective configuration of the group or layer of articles to be packaged, in particular when only one of the feed channels upstream is feeding articles.

In particular, as illustrated, the means for controlling the first and second conveyors 30, 30 perform a respective sequence of steps where a single conveyor 30, 30 fills, or provides, in sequence, the longitudinal rows, or a respective longitudinal row, of articles of the respective group or layer, as may be inferred from steps 1, 2 and 3 of the sequences illustrated in Figure 22, showing a group of six rolls in two rows being formed by a lefthand single feed system and a right-hand single feed system.

Further, as illustrated in Figures 20A to 20D, the means 16 for forming the group of articles to be packaged in the ready-formed wrapper or bag comprise, immediately downstream of the means 30 for forming one or more parallel rows of articles, means 32 for spacing and feeding the respective group or layer of articles, in particular in the form of respective crossbar means 320, especially comprising one or more rotary crossbars which follow a closed path having an upper feed section where the respective crossbar engages the back of and feeds the respective group or layer of articles which is supported at the bottom by a respective fixed flat surface 321, the means 32 preferably defining means for separating the part of the packaging apparatus situated upstream of the crossbar means 32 themselves from the part of the packaging apparatus situated downstream of the crossbar means 32 themselves.

In particular, as illustrated, downstream of the spacing and feeding means 32, the means 16 for forming the group of articles to be packaged in the ready-formed wrapper or bag comprise means 34 for stacking the respective layers of articles to form a corresponding group of articles to be packaged having more than one layer.

In particular, as illustrated, downstream of the spacing and feeding means 32, and in particular downstream of the stacking means 34, the means 16 for forming the group of articles to be packaged in the ready-formed wrapper or bag comprise means 36 for laterally compressing the respective group or layer of articles, if necessary.

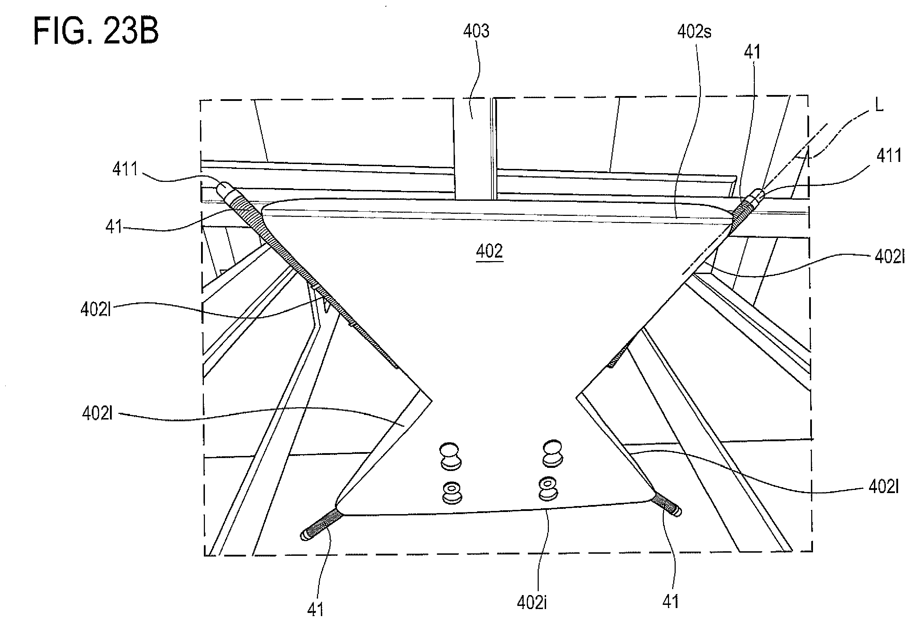

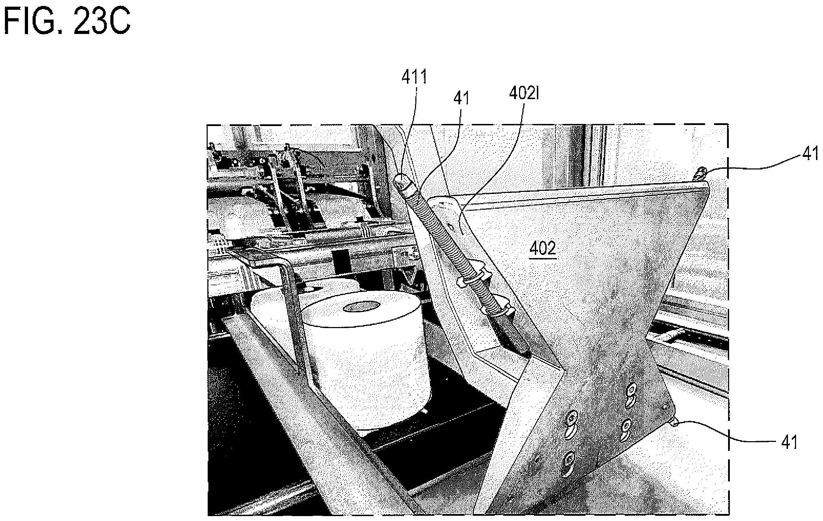

Advantageously, as illustrated in Figures 23A and 23B, means 40 are provided for longitudinally feeding and pushing the product or respective group of articles, and which are adapted to insert the product or respective group of articles into a corresponding preformed wrapper or bag in the open condition and/or to feed the ready-formed wrapper or bag with the product inside it to and, in particular, downstream of, the end closing means.

In particular, as illustrated, the means 40 for longitudinally feeding and pushing the product or respective group of articles into a corresponding preformed wrapper or bag and/or for feeding the ready-formed wrapper or bag with the product inside it to and, in particular, downstream of, the end closing means, comprise a respective pusher element, in particular a first and a second pusher element 401, 401, each movable longitudinally and adapted to engage the back of the product or group of articles at a respective withdrawn pickup position in such way as to feed and insert it into a respective preformed wrapper or bag in the open condition at a respective advanced insertion position and/or to then feed them together to the end closing means.

In particular, as illustrated, each pusher element 401, 401, comprises a respective member 402, 402 for engaging the back of the product or group of articles, the engagement member being mounted on a respective arm 403, 403 which is movable between a lowered position for engaging the product or group of articles and a raised position for returning the respective pusher and which is moved by a corresponding longitudinal drive belt 404.

Advantageously, as illustrated, each pusher element 401, 401 comprises a respective member 402, 402 for engaging the back of the product or group of articles and which, in particular, has a peripheral profile defined by respective upper and lower edges 402s, 402i, in particular horizontal and parallel to each other, and opposite lateral flanks, each defined by corresponding oblique edges 402I, 402I extending respectively from the upper and lower edges 402s, 402i and converging towards the central part of the engagement member until meeting at a respective joining point.

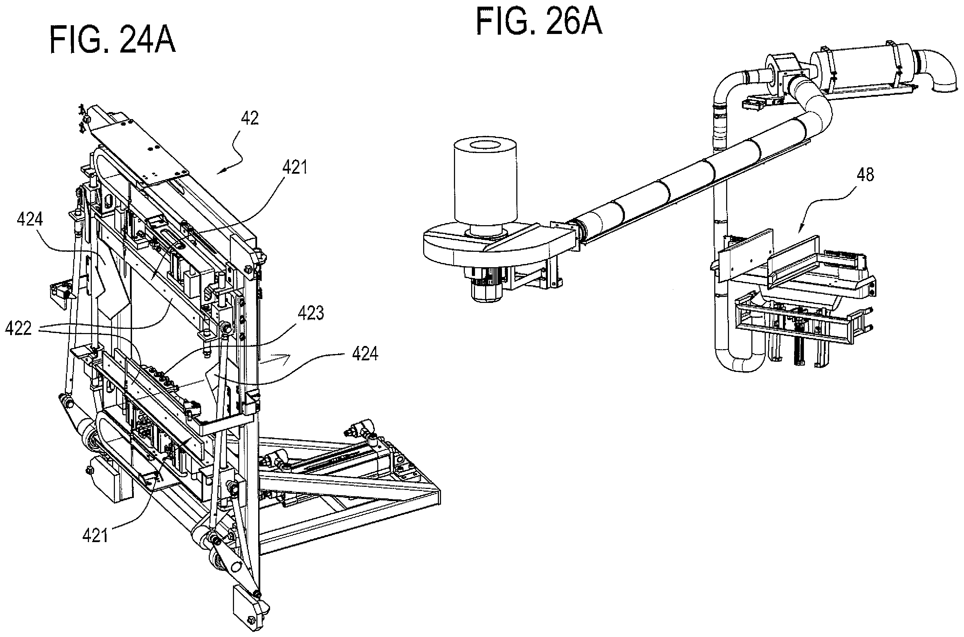

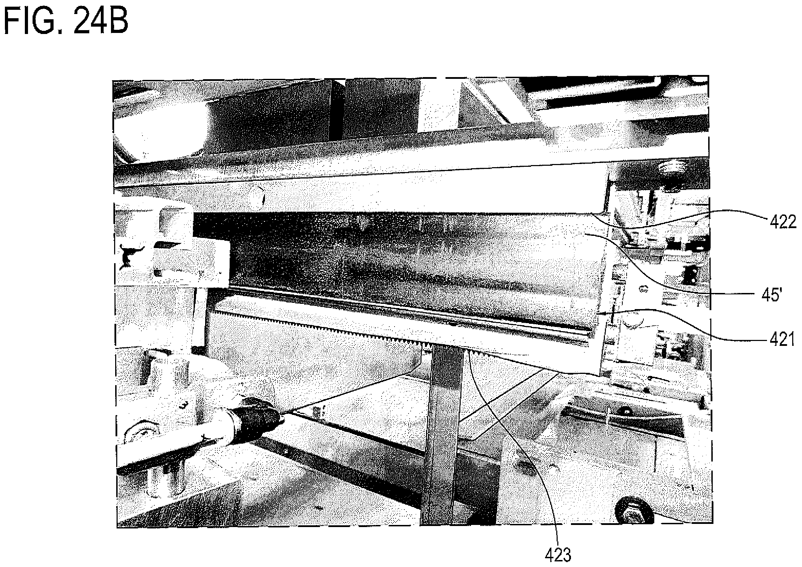

As may be inferred from Figure 24A, downstream of the zone where the product or group of articles is inserted into the preformed wrapper or bag, advantageous means 42 are provided for closing the open end of the preformed wrapper or bag.

In particular, as illustrated in Figure 24A, the means 42 for closing the open end of the preformed wrapper or bag comprise respective crossbars 421, 421 for joining, in particular sealing, and/or cutting the end of the preformed wrapper or bag, and which are movable between a perpendicularly spaced-apart position allowing the passage of the wrapper and the product contained therein and a perpendicularly close-together position for joining and/or cutting the end of the preformed wrapper or bag. In particular, as illustrated, each movable crossbar 421, 421 comprises a respective transverse joining surface 422, in particular for sealing the end of the preformed wrapper or bag, and/or a corresponding transverse blade 423 for cutting the end of the preformed wrapper or bag.

In particular, as illustrated, the means 42 for closing the open end of the preformed wrapper or bag comprise respective means for forming respective concertinas at the bottom of the preformed wrapper or bag containing the product and which are defined by respective shaped plates, in particular triangular tipped plates, 424, 424 which are movable, in particular transversely, between a spaced-apart position allowing the passage of the wrapper and the product contained therein and a close-together position for forming corresponding lateral concertinas at the end of the preformed wrapper or bag.

Advantageously, spreading-apart means are provided for keeping in the spread open condition at least one respective part or panel of the preformed wrapper or bag, in particular before closing the end of the preformed wrapper or bag.

Advantageously, as may be inferred from Figures 23B to 23D, the spreading-apart means for keeping in the spread open condition at least one respective part or panel of the preformed wrapper or bag comprise means 41 for engaging and keeping in the spread open or outwardly widened condition the panels 11a, 11b, 11c, 11d defining the side walls of the preformed wrapper or bag and, in particular, acting at, or in the vicinity of, the open end of the wrapper or bag.

Advantageously, the means 41 for engaging and keeping in the spread open condition the panels 11a, 11b, 11c, 11d defining the side walls of the preformed wrapper or bag are adapted to engage the corresponding inside surface of the preformed wrapper or bag.

Advantageously, the means 41 for engaging and keeping in the spread open condition the panels 11a, 11b, 11c, 11d defining the side walls of the preformed wrapper or bag are adapted to engage the inside faces of the panels defining the side walls of the preformed wrapper or bag, in particular at the edge between adjacent panels 11a, 11b, 11c, 11d of the side walls of the preformed wrapper or bag.

Advantageously, the means 41 for engaging and keeping in the spread open condition the panels 11a, 11b, 11c, 11d defining the side walls of the preformed wrapper or bag are in the form of elongate stem means having a respective free end 411, in particular rounded, for engaging the preformed wrapper or bag.

Advantageously, the stem means for engaging and keeping in the spread open condition the panels 11a, 11b, 11c, 11d comprise a plurality of stems 41, in particular four elongate stems, especially for engaging a corresponding inside edge of the preformed wrapper or bag.

In particular, as illustrated, each stem 41 extends obliquely, especially to engage a corresponding inside edge of the preformed wrapper or bag.

Advantageously, the means for engaging and keeping in the spread open condition the panels 11a, 11b, 11c, 11d defining the side walls of the preformed wrapper or bag are in the form of elastically compliant means, in particular elastically compliant in a respective plane which is transverse to the direction of extension and/or of engagement against the preformed wrapper or bag, that is to say, preferably elastically compliant in a direction transverse to the longitudinal axis L of the respective stem 41.

Advantageously, each stem for keeping in the spread open condition is in the form of a corresponding cylindrical helical spring, in particular in the form of a traction spring which supports a respective tip 411, preferably metallic with a rounded outside face, for engaging the preformed wrapper or bag.

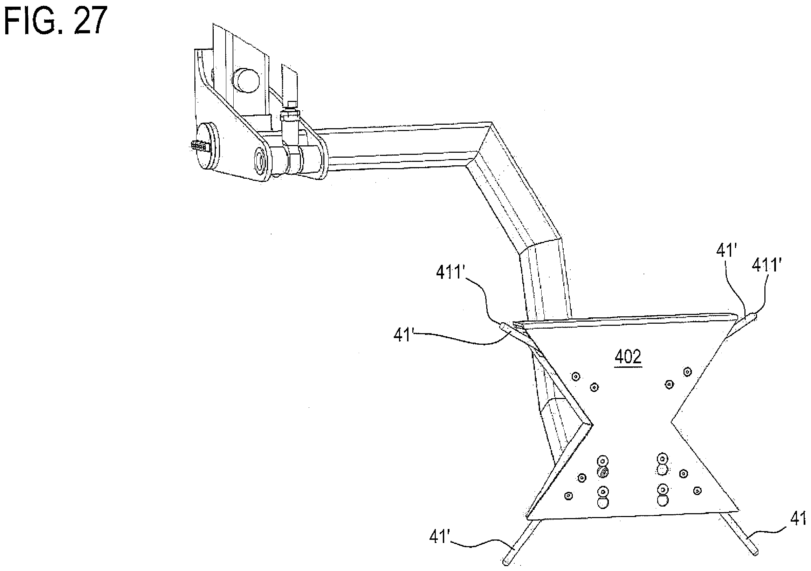

In a different embodiment, illustrated in Figure 27, the respective stem 41', with a respective rounded tip 411', which is in particular in the form of a flexible stem 41', is suitably made of polyurethane or other polymeric material.

Advantageously, the means, or respective stem 41, for engaging and keeping in the spread open condition the preformed wrapper or bag are supported, or is supported, by the respective pusher element 401 for pushing the product or group of articles, in particular by the respective member 402 for engaging the product or group of articles.

Advantageously, the means, or respective stem 41, for engaging and keeping in the spread open condition, protrude, or protrudes, outwards from the respective edge, in particular the upper edge 402s, the lower edge 402i and/or the lateral edge 402I, of the member 402 of the respective pusher element 401 for engaging the product or group of articles.

Advantageously, the means, or respective stem 41, for engaging and keeping in the spread open condition the panels 11a, 11b, 11c, 11d, in particular the respective stem, are or is integral with the respective lateral edge, in particular the oblique edge 402i of the member 402 of the respective pusher element 401 for engaging the product or group of articles.

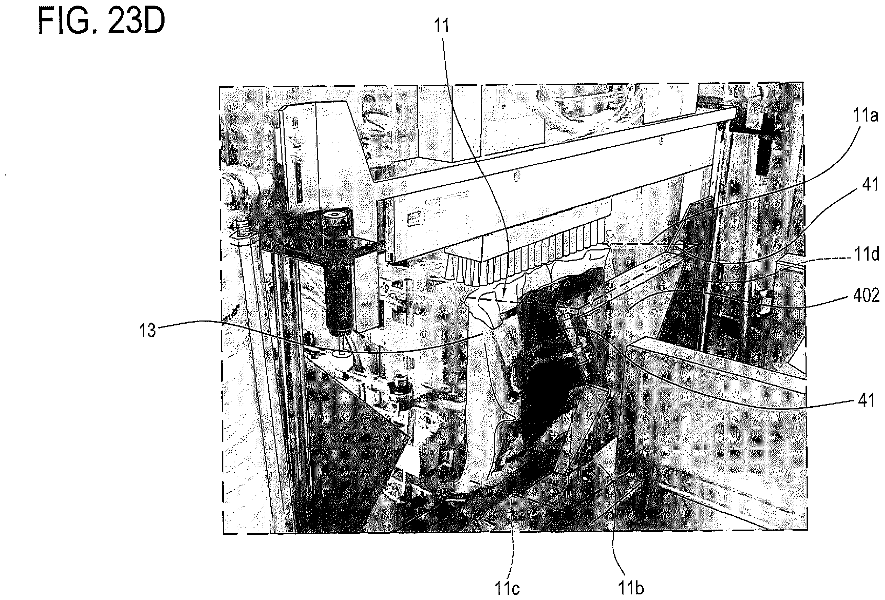

Advantageously, the respective pusher element 401, in particular, the member 402 for engaging the product or group of articles thereof, after having inserted the product or group of articles into the respective preformed wrapper or bag and having brought it to the position for closing the end of the preformed wrapper or bag, longitudinally beyond, or downstream of, the corresponding closing means 42, withdraws to a position upstream of the end closing means 42 for keeping the panels 11a, 11b, 11c, 11d defining the walls of the preformed wrapper or bag in the spread open condition, and advantageously keeps the bag open and the panels 11a, 11b, 11c, 11d ibn the wide-open condition, as shown in Figure 23D.

That way, it is possible to keep the open end of the wrapper in the spread open condition just before the end of the wrapper or bag is closed and a portion of it trimmed off.

In particular, the elastically compliant means or stems 41 make it possible to not damage the wrapper or bag when the respective engagement member of the pusher enters the wrapper or bag, taking the product or group of articles along with it, and/or do not interfere in unwanted manner with other components of the apparatus during the longitudinal stroke of the respective pusher 401, thus avoiding the risk of also damaging corresponding components of the apparatus.

Advantageously, the spreading-apart means for keeping in the spread open condition the preformed wrapper or bag comprise means 44 for engaging and wiping the respective surface or face of the preformed wrapper or bag, in particular the respective panel 11a, 11b, 11c, 11d defining the corresponding side or peripheral wall of the preformed wrapper or bag 11.

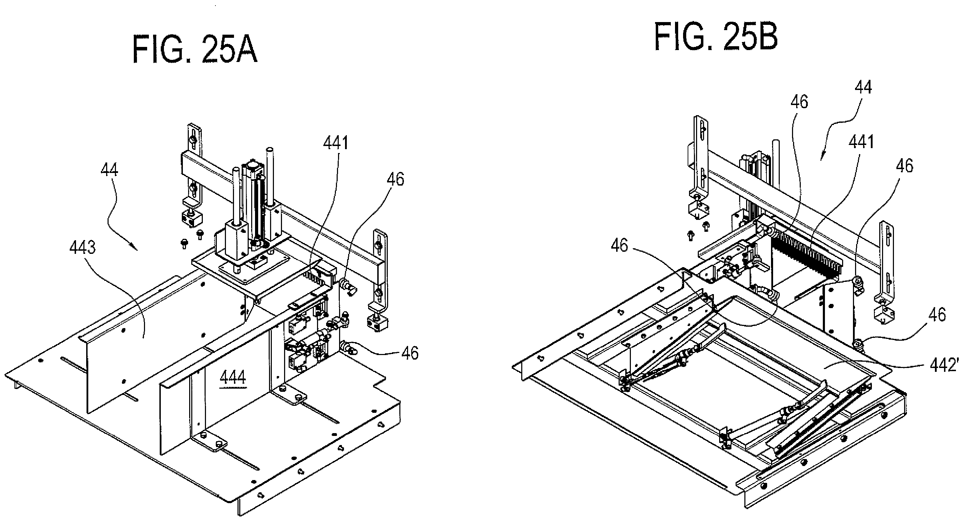

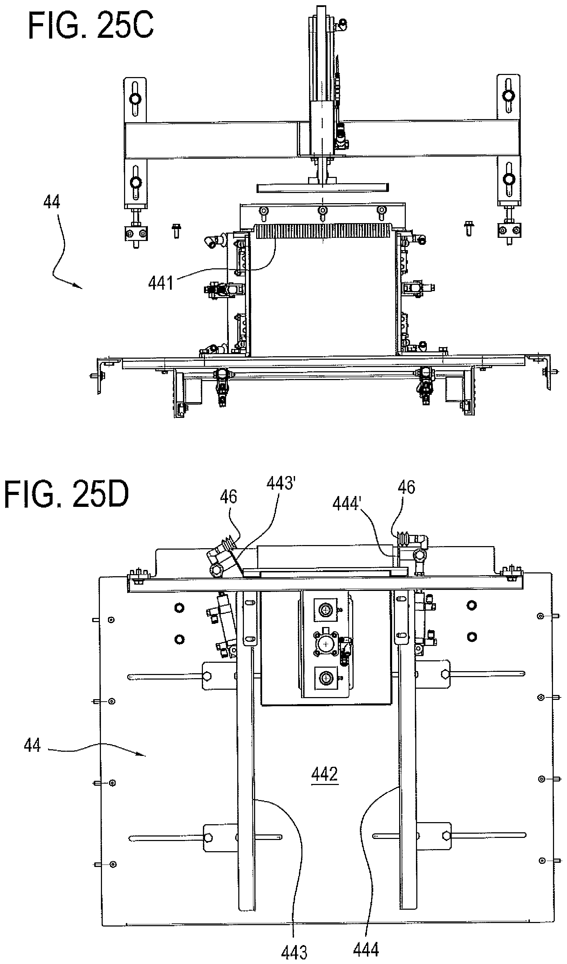

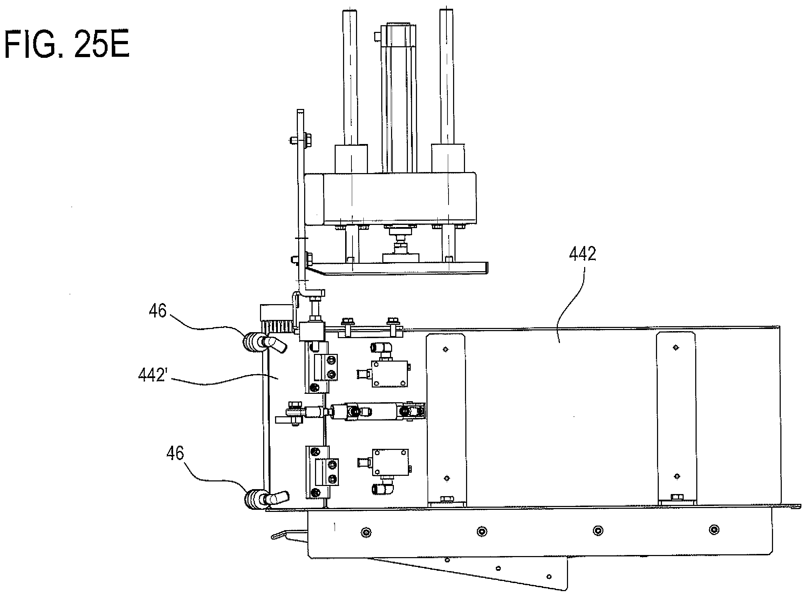

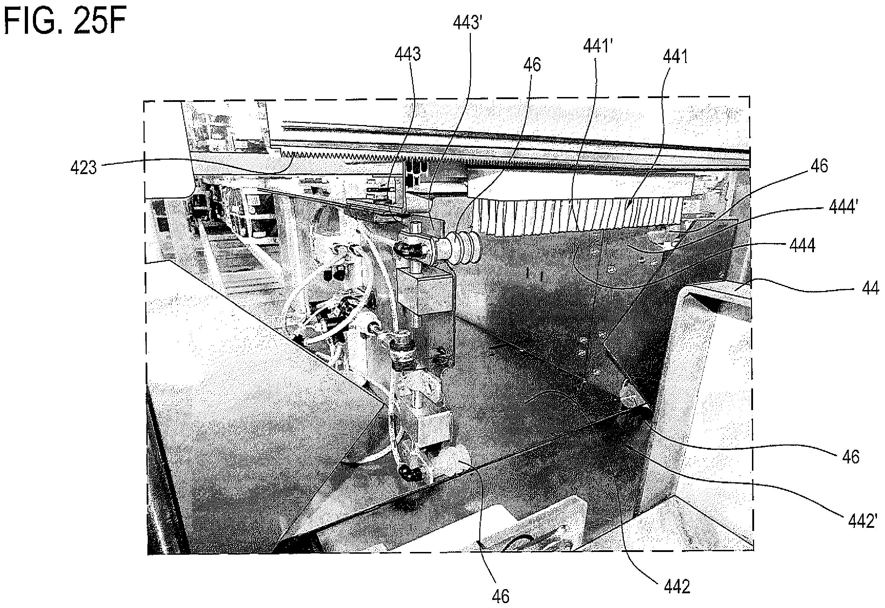

Advantageously, as may be inferred in particular from Figures 25A to 25F, the means 44 for engaging and wiping the respective surface or face of the preformed wrapper or bag, in particular the respective panel defining the corresponding side or peripheral wall of the preformed wrapper or bag 11 are provided downstream, in particular immediately downstream, of the end closing means 42.

Advantageously, the means for engaging and wiping the respective surface or face of the preformed wrapper or bag comprise corresponding brush means 441, in particular engaging and wiping the upper surface or panel 11a of the preformed wrapper or bag with the product or group of articles inside it.

Advantageously, the brush means 441 extend transversely to the longitudinal feeding direction of the product or group of articles packaged inside the preformed wrapper or bag.

Advantageously, the brush means 441 comprise respective perpendicular bristles whose free ends 441' engage and wipe the respective opposing surface or face of the preformed wrapper or bag.

In particular, as illustrated, the brush means 441 are provided above the zone where the preformed wrapper or bag, with the product or group of articles inside it, passes and at a position such as to engage and wipe the respective opposing surface or face of the preformed wrapper or bag.

Advantageously, the means 44 for engaging and wiping the respective surface or face of the preformed wrapper or bag, in particular the respective panel defining the corresponding side or peripheral wall of the preformed wrapper or bag 11 are defined by the flat surface 442 which supports the underside of the preformed wrapper or bag, with the product or article inside it, the flat surface 442 engaging and wiping the underside surface 11i of the preformed wrapper or bag.

Advantageously, the flat surface which supports the underside of the preformed wrapper or bag, with the product or article inside it, has a fixed portion 442 and a movable end portion 442' which extends between the edge upstream of the fixed portion 442 and the opposing end closing means 42 and which is adapted to withdraw to allow inserting the suction means 48, illustrated in Figure 26A, for extracting the portion trimmed off.

Advantageously, the means 44 for engaging and wiping the respective surface or face of the preformed wrapper or bag, in particular the respective panel defining the corresponding side or peripheral wall of the preformed wrapper or bag 11, are also defined by opposed longitudinal side walls 443, 444 for engaging and wiping the opposite lateral surfaces 11c, 11d of the preformed wrapper or bag.

Advantageously, the means 44 for engaging and wiping the respective surface or face of the preformed wrapper or bag, in particular the respective panel defining the corresponding closed end wall of the preformed wrapper or bag 11 are located on the end closing means 42, in particular on the respective crossbar 421 for joining and/or cutting a corresponding portion of the preformed wrapper or bag to be trimmed off, in particular on the face 45' of the crossbar facing downstream and which engages a corresponding rear surface or face of the preformed wrapper or bag with the product or group of articles inside it.

Advantageously, the means 44 for engaging and wiping the respective surface or face of the preformed wrapper or bag, in particular the respective panel defining the corresponding closed end wall of the preformed wrapper or bag 11 and which are located on the end closing means 42, comprise a respective oversize friction surface, in particular in the form of a respective rubberized surface 45' on the self-same crossbar 421 for joining and/or cutting the end portion of the wrapper.

Advantageously, the spreading-apart means for keeping in the spread open condition at least one respective part or panel of the preformed wrapper or bag comprise means 46 for engaging and keeping in the spread open condition a respective lateral portion, in particular a bottom end portion, of the respective panel 11c, 11d defining the corresponding side wall of the preformed wrapper or bag.

Advantageously, the means for engaging and keeping in the spread open condition a respective lateral portion, in particular a bottom end portion, of the respective panel 11c, 11d defining the corresponding side wall of the preformed wrapper or bag comprise respective means 46 for gripping the corresponding outside surface of the preformed wrapper or bag.

Advantageously, the means for gripping the corresponding outside surface of the preformed wrapper or bag are in the form of respective suction cup means 46.

In particular, as illustrated, the gripping means, or suction cup means, comprise, for each side, a first and a second suction part, or cup, 46, 46, perpendicularly spaced from each other and preferably operating in the vicinity of the respective upper and lower edge or panel 11a, 11b of the preformed wrapper or bag.

Advantageously, the means 46 for gripping the corresponding outside surface of the preformed wrapper or bag are movable between a transversely close-together position for gripping and keeping in the spread open condition the respective lateral or bottom end portion of the preformed wrapper or bag and a transversely spaced-apart position allowing the preformed wrapper or bag in the filled condition to pass through.

Advantageously, the means 46 for gripping the corresponding outside surface of the preformed wrapper or bag are movable together with a movable part 443', 444' of the longitudinal wiping side wall 443, 444 of the preformed wrapper or bag in the filled condition, the gripping means 46 being mounted on the movable part 443', 444', the movable part 443', 444' being located upstream of, and in particular pivoted to, the respective fixed portion of the corresponding longitudinal wiping side wall 443, 444 of the preformed wrapper or bag in the filled condition.

In particular, as illustrated in Figure 26A and as mentioned above, suction means 48 are provided for extracting and rejecting the trimmed off portion of the preformed wrapper or bag in the closed condition.

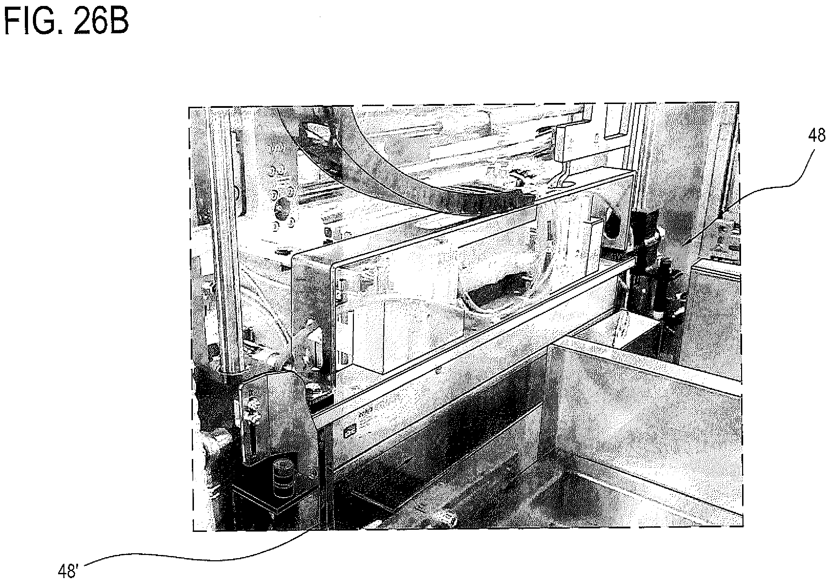

Advantageously, as may be inferred from Figure 26B, the suction means for extracting and rejecting the trimmed off portion of the preformed wrapper or bag in the closed condition comprise a suction pipe 48 for extracting the trimmed off portion at the zone 48' for closing the end of the preformed wrapper or bag, the suction pipe being movable to the extraction position, in particular to the raised position, independently and after the end of the preformed wrapper or bag has been closed.

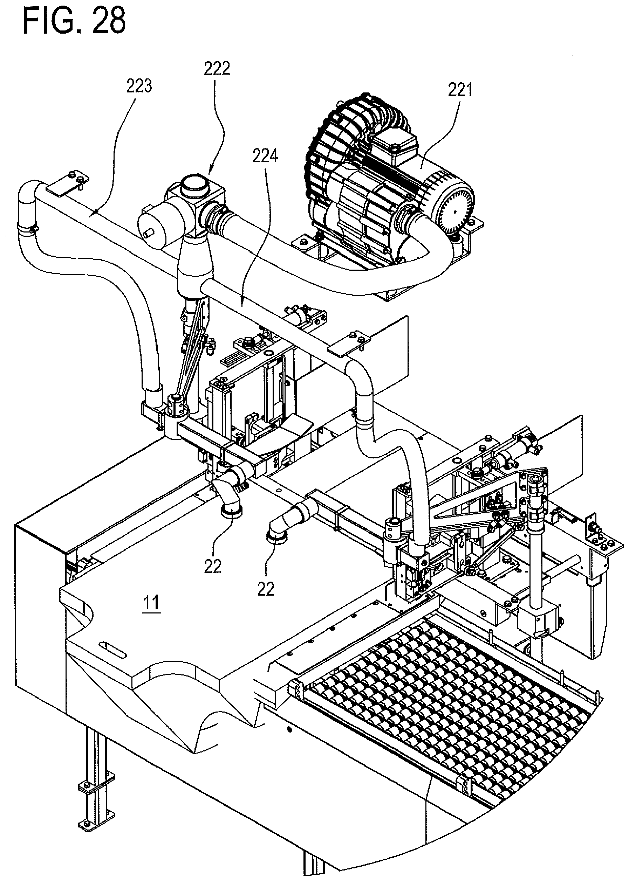

In a further embodiment, illustrated in Figure 28, means 22, 22 are provided for opening the open mouth for inserting the product into the ready-formed wrapper and which, as in the first preferred embodiment, are in the form of a first and a second suction cup 22, 22 mounted on respective arms which extend above the wrapper from opposite sides relative to the preformed wrapper itself, that is, relative to the zone the wrapper is placed in, and which preferably move between a lower position, for gripping the corresponding wrapper margin, and a raised position for inserting the means by which the mouth is spread open, the first and second suction sups 22, 22 being advantageously connected to a single vacuum generator 221.

In particular, as illustrated, the single vacuum generator 221 is connected by means of a duct 220 to a flow dividing valve 222 which transmits the suction by way of corresponding ducts 223, 224 to the first and second suction cups 22, 22 for opening the bag.

Thus provided is an apparatus which allows obtaining packages with a neat and attractive finish and more appealing to consumers of the packaged products.

Moreover, the apparatus uses a reduced number of motor drives, with obvious advantages in terms of the construction and running costs of the apparatus.

The invention described is susceptible of industrial application. It would be obvious to one skilled in the art that several changes and modifications can be made to the invention without departing from the scope of the invention, described in depth above. Also, further preferred embodiments of the invention comprising one or more of the features described herein can easily be imagined. It will also be understood that all the details of the invention may be replaced by technically equivalent elements.

## Claims

1. An apparatus (10) for packaging a product (13) of the tissue industry in a respective preformed wrapper (11), preferably made of a plastic film, and being in the form of a bag, the preformed wrapper having a respective open end (111), allowing the product to be inserted into the wrapper, and the product being in the form of a group of articles comprising one or more layers placed on top of each other, and especially being in the form of packets or rolls; the apparatus comprising:
- means for feeding the preformed wrappers,
- means for feeding the product,
- means (12) for inserting the product into the preformed wrapper through the open end (111), and
- clamping means (14), configured for clamping the preformed wrapper (11) at the open end (111) when the product (13) is inserted into the preformed wrapper (1);
the said clamping means (14), for clamping the preformed wrapper, comprising spreading means (141) for spreading open the mouth (111) for inserting the product, the spreading means including first and second spreading means (141, 141) operating on opposite sides of the wrapper, the said clamping means (14) further comprising first and second external wrapper engagement means (142, 142) operating on opposite sides of the wrapper, wherein the wrapper external means (142) operate in conjunction with the spreading means (141) which internally engage the respective wrapper margin and clamp it against the wrapper external means (142), **characterized in that** the external wrapper engagement means (142) extend vertically, **in that** said first and second external wrapper engagement means (142, 142) comprise first and a second clamping pad (142a, 142a) which are transversely spaced from each other such as to allow the product being inserted into the wrapper (1) to pass through it, and being adapted to engage opposite side portions of the wrapper (1) defining the bag, and **in that** said first and second means (141, 141) for spreading open the mouth (111) through which the product can be inserted operate on opposite transversely sides of the wrapper, respectively pushing and clamping the respective wrapper margin against said first and second external wrapper engagement means (142, 142) operating on opposite transversely sides of the same wrapper.

2. The apparatus according to claim 1, **characterized in that** the wrapper external means (142) are in the form of means which are fixed relative to the internal engagement and/or spreading open means (141) which are movable in order to apply an action by which the corresponding wrapper margin is clamped against the external engagement means (142).

3. The apparatus according to any one of the preceding claims, wherein the movement of the spreading means (141) which spread open a product insertion mouth of the wrapper (1) defines or coincides with, the movement by which the respective wrapper margin is clamped.

4. The apparatus according to any one of the preceding claims, comprising external wrapper engagement means (142) being longitudinally movable, together with the spreading open means (141).

5. The apparatus according to any one of the preceding claims, where in the clamping means (14) are adapted to release the preformed wrapper (1) when the wrapper (1) is pulled away from them by the action applied to it by the means for feeding the product.

6. The apparatus according to any one of the preceding claims, wherein the clamping means (14) engage a portion of an edge defining the open end (111) of the preformed wrapper (1), wherein said portion can be eliminated, downstream of the zone for closing the open end (111), by sealing.

7. The apparatus according to any one of the preceding claims, comprising spreading means (141), which comprise on each side a first and a second jaw (141a, 141b) which are movable together between an inner, disengaged position and an outer, wrapper engaged position.

8. The apparatus according to any one of the preceding claims, **characterized in that** the external wrapper engagement means (142) have a respective portion (142a) for engaging the corresponding wrapper margin and which is made of an elastic material, preferably rubber and/or **in that** the external wrapper engagement means (142) have a flat face which, in the gripping condition, engages the wrapper, and which, in particular, is defined by an engagement pad with a quadrangular cross section.

9. The apparatus according to any one of the preceding claims, **characterized in that** the external wrapper engagement means comprise means for magnetically attracting the internal engagement means towards and against the external means.

10. The apparatus according to any one of the preceding claims comprising spreading-apart means for keeping in the spread open condition at least one panel of the preformed wrapper (1) wherein the spreading-apart means comprise means (41) for engaging and keeping in the spread open the panels (11a, 11b, 11c, 11d) defining the side walls of the preformed wrapper.

11. The apparatus according to claim 10, wherein the means (41) for 30 engaging and keeping in the spread open condition the panels (11a, 11b, 11c, 11d) defining the side walls of the preformed wrapper are adapted to engage the corresponding inside surface of the preformed wrapper at the edge between adjacent panels (11a, 11b, 11c, 11d) of the side walls of the preformed wrapper.

12. The apparatus according to claim 10 or 11, wherein the means (41) for engaging and keeping in the spread open condition the panels (11a, 11b, 11c, 11d) defining the side walls of the preformed wrapper are in the form of elongate stem means having a respective free end (411), for engaging the preformed wrapper or bag.

13. The apparatus according to claim 12, wherein the means (41) for engaging and keeping in the spread open condition the panels (11a, 11b, 11c, 11d) defining the side walls of the preformed wrapper or bag are in the form of elastically yielding means elastically yielding in a direction transverse to the longitudinal axis (L) of the respective stem (41).

14. The apparatus according to claim 13, wherein each stem for engaging and keeping in the spread open condition is in the form of a corresponding cylindrical helical traction spring which supports a respective tip (411) for engaging the preformed wrapper, or is in the form of a flexible stem made of polyurethane or other polymeric material.

15. The apparatus according to any one of claims from 10 to 14, wherein the means for engaging and keeping in the spread open condition the preformed wrapper or bag are supported by a respective pusher element (401) for pushing the product or group of articles.

## Patentansprüche

1. Vorrichtung (10) zum Verpacken eines Produkts (13) der Textilindustrie in einer jeweiligen vorgeformten Umhüllung (11), vorzugsweise bestehend aus einer Kunststofffolie in Form eines Beutels, wobei die vorgeformte Umhüllung hat ein entsprechendes offenes Ende (111), das das Einführen des Produkts in die Umhüllung ermöglicht, und das Produkt hat die Form einer Gruppe von Gegenständen, die eine oder mehrere übereinander angeordnete Schichten, insbesondere in Form von Paketen oder Rollen, umfasst; die Vorrichtung umfassend:
- Mittel zum Zuführen der vorgeformten Umhüllungen,
- Mittel zur Zuführen des Produkts,
- Mittel (12) zum Einführen des Produkts in die vorgeformte Umhüllung durch das offene Ende (111), und
- Klemmmittel (14), die derart konfiguriert sind, um die vorgeformte Umhüllung (11) am offenen Ende (111) zu klemmen, wenn das Produkt (13) in die vorgeformte Umhüllung (1) eingeführt wird,
wobei die genannten Klemmmittel (14) zum Klemmen der vorgeformten Umhüllung Verbreiterungsmittel (141) zum Erweitern des Mundes (111) zum Einführen des Produkts umfassen, wobei die Verbreiterungsmittel erste und zweite Verbreiterungsmittel (141, 141) umfassen, die an gegenüberliegende Seiten der Umhüllung wirken, wobei die Klemmmittel (14) ferner erste und zweite externe Kopplungsmittel (142, 142) der Umhüllung umfassen, die auf gegenüberliegende Seiten der Umhüllung wirken, wobei die externe Umhüllungsmittel (142) mit Spreizmitteln (141) zusammenwirken, die intern mit dem jeweiligen Rand der Umhüllung koppelt sind und es gegen die externe Umhüllungsmittel (142) verriegeln, **dadurch gekennzeichnet, dass** sich die externen Kopplungsmittel (142) der Umhüllung derart vertikal erstrecken, dass die ersten und zweiten externen Kopplungsmittel (142, 142) der Umhüllung einen ersten und einen zweiten Klemmschuh (142a, 142a) umfassen, die derart quer voneinander beabstandet sind, dass das Produkt, das in die Umhüllung (1) eingeführt wird, durch diese hindurchtreten kann und dazu geeignet ist, sich mit gegenüberliegenden Seiten der Umhüllung (1) zu koppeln, die den Beutel definieren, und dass erste und zweite Mittel (141, 141) zum Verbreitern des Mundes (111), durch den das Produkt eingeführt werden kann, auf gegenüberliegenden Seiten der Umhüllung wirken, um die jeweilige Umhüllungskante gegen die erste und zweite externe Kopplungseinrichtung (142, 142) der Umhüllung zu drücken und klemmen, die auf quer gegenüberliegenden Seiten derselben Umhüllung wirken.

2. Vorrichtung nach Anspruch 1, **dadurch gekennzeichnet, dass** die externen Umhüllungsmittel (142) die Form von Mitteln aufweisen, die in Bezug auf die inneren Kopplungs- und/oder Verbreiterungsmittel (141) befestigt sind, die bewegt werden können um eine Aktion anzuwenden, bei der die entsprechende Umhüllungskante gegen die externen Kupplungsmittel (142) geklemmt wird.

3. Vorrichtung nach einem der vorhergehenden Ansprüche, wobei die Bewegung der Verbreiterungsmittel (141), die einen Mund der Umhüllung (1) zum Einsetzen eines Produkts offen halten, definiert oder zusammenfällt mit der Bewegung, durch die die jeweilige Kante der Umhüllung geklemmt wird.

4. Vorrichtung nach einem der vorhergehenden Ansprüche, umfassend externe Kopplungsmittel (142) der Umhüllung, die zusammen mit den Mitteln zum Erweitern der Öffnung (141) in Längsrichtung bewegt werden können.

5. Vorrichtung nach einem der vorhergehenden Ansprüche, wobei die Klemmmittel (142) derart angepasst sind, um die vorgeformte Umhüllung (1) freizugeben, wenn die Umhüllung (1) durch die auf sie ausgeübte Wirkung von ihnen, durch die Mittel zum Speisen des Produkts, weggezogen wird.

6. Vorrichtung nach einem der vorhergehenden Ansprüche, wobei sich die Klemmmittel (14) mit einem Teil einer Kante koppeln, die das offene Ende (111) der vorgeformten Umhüllung (1) definiert, wo das besagte Teil stromabwärts des Bereichs entfernt sein kann, um das offene Ende (111) abzudichten.

7. Vorrichtung nach einem der vorhergehenden Ansprüche, umfassend Verbreiterungsmittel (141), die auf jeder Seite eine erste und eine zweite Backe (141a, 141b) umfassen, die zusammen zwischen einer entkoppelten inneren Position und einer gekoppelten äußeren Position der Umhüllung beweglich sind.

8. Vorrichtung nach einem der vorhergehenden Ansprüche, **dadurch gekennzeichnet, dass** die äußeren Kopplungsmittel (142) der Umhüllung einen entsprechenden Teil (142a) zum Koppeln mit der entsprechenden Kante der Umhüllung aufweisen, der aus einem elastischen Material, vorzugsweise Gummi gebildet ist und/oder dass die äußeren Kupplungsmittel (142) der Umhüllung eine ebene Fläche aufweisen, die im Greifzustand in die Umhüllung eingreift und die insbesondere durch einen Kupplungsschuh mit einem Abschnitt mit einem viereckigen Querschnitt definiert ist.

9. Vorrichtung nach einem der vorhergehenden Ansprüche, **dadurch gekennzeichnet, dass** die äußeren Kopplungsmittel der Umhüllung Mittel zum magnetischen Anziehen der inneren Kopplungsmittel, zu und gegen die äußeren Mittel, umfassen.

10. Vorrichtung nach einem der vorhergehenden Ansprüche, umfassend Verbreiterungsmittel zum Aufrechterhalten von mindestens eines Paneels der vorgeformten Umhüllung (1) im verbreiteten offenen Zustand, wobei die Verbreiterungsmittel Mittel (41) umfassen zum Eingreifen und zum Aufrechterhalten im verbreiteten offenen Zustand die Paneele (11a, 11b, 11c, 11d), die die Seitenwände der vorgeformten Umhüllung definieren.

11. Vorrichtung nach Anspruch 10, wobei die Mittel (41) zum Koppeln und zum Aufrechthalten im offenen verbreiteten Zustand der Paneele (11a, 11b, 11c, 11d), die die Seitenwände der vorgeformten Umhüllung definieren, zum Koppeln der entsprechenden Innenfläche der vorgeformten Umhüllung an der Kante zwischen benachbarten Paneele (11a, 11b, 11c, 11d) der Seitenwände der vorgeformten Umhüllung, geeignet sind.

12. Vorrichtung nach Anspruch 10 oder 11, wobei die Mittel (41) zum Koppeln und Aufrechthalten der Paneele (11a, 11b, 11c, 11d), die die Seitenwände des vorgeformten Umhüllung im erweiterten offenen Zustand definieren, in Form von länglichen Stäben vorliegen, die mit einem entsprechenden freien Ende (411) versehen sind, um mit der vorgeformten Umhüllung oder Beutel gekoppelt zu werden.

13. Vorrichtung nach Anspruch 12, wobei die Mittel (41) zum Koppeln und zum Aufrechthalten der Paneele (11a, 11b, 11c, 11d), die die Seitenwände der vorgeformten Umhüllung oder Beutels im offenen verbreiteten Zustand definieren, die Form von elastisch nachgebenden Mitteln aufweisen, die in Querrichtung in Bezug auf die Längsachse (L) des jeweiligen Stabes (41) elastisch nachgeben.

14. Vorrichtung nach Anspruch 13, wobei jeder Stab zum Koppeln und zum Aufrechterhalten des verbreiteten offenen Zustands entweder die Form einer entsprechenden zylindrischen schraubenförmigen Zugfeder aufweist, die entweder eine entsprechende Spitze (411) zum Koppeln mit der vorgeformten Umhüllung trägt, oder die Form eines flexiblen Stabes aufweist, der aus Polyurethan oder aus einem anderen Polymermaterial, gebildet ist.

15. Vorrichtung nach einem der Ansprüche 10 bis 14, wobei die Mittel zum Koppeln und zum Aufrechthalten der vorgeformten Umhüllung oder Beutels im offenen verbreiteten Zustand, durch ein entsprechendes Druckelement (401) zum Drücken des Produkts oder einer Artikelgruppe, gestützt sind.

## Revendications

1. Appareil (10) pour emballer un produit (13) de l'industrie textile dans un emballage préformé respectif (11), constitué de préférence d'un film plastique ayant la forme d'un sac, l'emballage préformé ayant une extrémité ouverte respective (111), qui permet d'insérer le produit dans l'emballage, et le produit a la forme d'un groupe d'articles comprenant une ou plusieurs couches disposées les unes sur les autres, et en particulier ayant la forme de paquets ou de rouleaux; l'appareil comprenant:
- des moyens d'alimentation des emballages préformés,
- des moyens d'alimentation du produit,
- des moyens (12) pour insérer le produit à l'intérieur de l'emballage préformé à travers l'extrémité ouverte (111), et
- des moyens de verrouillage (14) configurés pour verrouiller l'emballage préformé (11) sur l'extrémité ouverte (111) lorsque le produit (13) a été inséré dans l'emballage préformé (1),
lesdits moyens de verrouillage (14) pour verrouiller l'emballage préformé comprennent des moyens d'élargissement (141) pour élargir la bouche (111) pour insérer le produit, les moyens d'élargissement comprenant des premiers et des deuxièmes moyens d'élargissement (141, 141) fonctionnant sur côtés opposés de l'emballage, lesdits moyens de verrouillage (14) comprenant en outre des premiers et des deuxièmes moyens de couplage externes (142, 142) qui fonctionnent sur des côtés opposés de l'emballage, dans lequel les moyens d'emballage externes (142) fonctionnent conjointement avec les moyens d'élargissement (141) qui s'accouplent intérieurement avec la marge d'emballage respective en le verrouillant contre les moyens d'emballage externes (142), **caractérisé en ce que** les moyens de couplage externes (142) de l'emballage se développent verticalement, que les premiers et deuxièmes moyens de couplage externes (142, 142) de l'emballage comprennent un premier et un deuxième sabot de verrouillage (142a, 142a), qui sont espacés l'un de l'autre dans le sens transversal, de manière à permettre au produit qui est inséré dans l'emballage (1) de passer à travers celui-ci, et sont adaptés pour s'accoupler avec des côtés opposés de l'emballage (1) définissant le sac, et que lesdits premiers et deuxièmes moyens (141, 141) pour élargir la bouche (111) à travers laquelle le produit peut être inséré, fonctionnent respectivement sur les côtés transversalement opposés de l'emballage, de manière à pousser et verrouiller la marge respective de l'emballage contre les premiers et deuxièmes moyens de couplage externes (142, 142) de l'emballage, qui fonctionnent sur les côtés transversalement opposés du même emballage.

2. Appareil selon la revendication 1, **caractérisé en ce que** les moyens d'emballage externes (142) ont la forme de moyens qui sont fixes par rapport aux moyens de couplage internes et/ou d'élargissement (141) qui peuvent être déplacés dans le but d'appliquer une action par laquelle la marge de l'emballage correspondante est verrouillée contre le moyen de couplage externe (142).

3. Appareil selon l'une des revendications précédentes, dans lequel le mouvement des moyens d'élargissement (141) qui maintiennent ouverte une bouche de l'emballage (1) pour insérer un produit, définit ou coïncide avec le mouvement par lequel la marge respective de l'emballage est verrouillée.

4. Appareil selon l'une des revendications précédentes, comprenant des moyens de couplage externes (142) de l'emballage qui peuvent être déplacés longitudinalement avec les moyens d'élargissement de l'ouverture (141).

5. Appareil selon l'une des revendications précédentes, dans lequel les moyens de verrouillage (14) sont adaptés pour libérer l'emballage préformé (1) lorsque l'emballage (1) en est éloigné par l'action qui lui est appliquée par les moyens pour alimenter le produit.

6. Appareil selon l'une des revendications précédentes, dans lequel les moyens de verrouillage (14) s'accouplent avec une partie d'un bord qui définit l'extrémité ouverte (111) de l'emballage préformé (1), lorsque ladite partie peut être éliminée, en aval de la zone pour fermer et sceller l'extrémité ouverte (111).

7. Appareil selon l'une des revendications précédentes, comprenant des moyens d'élargissement (141), qui comprennent de chaque côté une première et une deuxième mâchoire (141a, 141b) qui sont mobiles ensemble entre une position interne découplée et une position externe couplée de l'emballage.

8. Appareil selon l'une des revendications précédentes, **caractérisé en ce que** les moyens de couplage externes (142) de l'emballage ont une partie respective (142a) pour s'accoupler avec la marge correspondante de l'emballage et qui est formée d'un matériau élastique, de préférence en caoutchouc, et/ou **en ce que** les moyens de couplage externes (142) de l'emballage présentent une surface plane qui à l'état de préhension s'engage dans l'emballage et qui est notamment définie par un sabot de couplage à section croix quadrangulaire.

9. Appareil selon l'une des revendications précédentes, **caractérisé en ce que** les moyens de couplage externes de l'emballage comprennent des moyens pour attirer magnétiquement les moyens de couplage internes vers et contre les moyens externes.

10. Appareil selon l'une des revendications précédentes, comprenant des moyens d'élargissement pour maintenir au moins un panneau de l'emballage préformé (1) à l'état ouvert élargi, dans lequel les moyens d'élargissement comprennent des moyens (41) pour s'engager et pour maintenir dans l'état élargi les ouvertures des panneaux (11a, 11b, 11c, 11d) qui définissent les parois latérales de l'emballage préformé.

11. Appareil selon la revendication 10, dans lequel les moyens (41) de couplage et de maintien des panneaux (11a, 11b, 11c, 11d) définissant les parois latérales de l'emballage préformé à l'état ouvert élargi, sont adaptés pour être couplés avec la surface interne correspondante de l'emballage préformé, au bord entre des panneaux adjacents (11a, 11b, 11c, 11d) des parois latérales de l'emballage préformé.

12. Appareil selon la revendication 10 ou 11, dans lequel les moyens (41) de couplage et de maintien des panneaux (11a, 11b, 11c, 11d) qui définissent les parois latérales de l'emballage préformé à l'état élargi ouvert, ont la forme de tiges allongées pourvues d'une extrémité libre respective (411), à coupler avec l'emballage ou le sac préformé.

13. Appareil selon la revendication 12, dans lequel les moyens (41) pour coupler et maintenir les panneaux (11a, 11b, 11c, 11d) définissant les parois latérales de l'emballage ou du sac préformé à l'état élargi ouvert, ont la forme de moyens élastiques qui cèdent élastiquement dans une direction transversale par rapport à l'axe longitudinal (L) de la tige respective (41).

14. Appareil selon la revendication 13, dans lequel chaque tige de couplage et de maintien de l'état ouvert élargi a la forme d'un ressort hélicoïdal de traction cylindrique correspondant, qui supporte une pointe respective (411) pour le couplage avec l'emballage préformé, ou a la forme d'une tige flexible formée de polyuréthane ou d'un autre matériau polymère.

15. Appareil selon l'une des revendications 10 à 14, dans lequel les moyens de couplage et de maintien de l'emballage ou du sac préformé à l'état ouvert élargi sont supportés par un élément poussoir respectif (401) pour pousser le produit ou un groupe d'articles.
